# EUROPEAN PATENT SPECIFICATION

(11) **EP 4 096 295 B1**
(45) Date of publication and mention of the grant of the patent: **06.05.2026**
(21) Application number: 21744636.8
(22) Date of filing: 21.01.2021
(51) Int. Cl.: H04W 36/00, H04W 8/24, H04W 60/00, H04W 36/08

(54) **METHOD AND DEVICE FOR PROCESSING ACCESS INFORMATION IN RADIO COMMUNICATION SYSTEM**
VERFAHREN UND VORRICHTUNG ZUM VERARBEITEN VON ZUGANGSINFORMATIONEN IN EINEM FUNKKOMMUNIKATIONSSYSTEM
PROCÉDÉ ET DISPOSITIF POUR TRAITER DES INFORMATIONS D'ACCÈS DANS UN SYSTÈME DE COMMUNICATION RADIO

(30) Priority: 21.01.2020 KR 20200008054; 21.01.2020 KR 20200008172
(43) Date of publication of application: 30.11.2022
(73) Proprietor: Samsung Electronics Co., Ltd., Suwon-si, Gyeonggi-do 16677 (KR)
(72) Inventor: SUH, Kyungjoo, Suwon-si, Gyeonggi-do 16677 (KR)
(74) Representative: Gulde & Partner
(86) International application number: PCT/KR2021/000825
(87) International publication number: WO 2021/150030

(56) References cited:
- EP-A1- 4 021 074
- WO-A1-2020/001754
- KR-A- 20210 094 417
- US-A1- 2019 380 045
- ANONYMOUS: "3rd Generation Partnership Project; Technical Specification Group Services and System Aspects; Procedures for the 5G System (5GS); Stage 2 (Release 16)", vol. SA WG2, no. V16.3.0, 22 December 2019 (2019-12-22), pages 1 - 558, XP051840932, Retrieved from the Internet <URL:ftp://ftp.3gpp.org/Specs/archive/23_series/23.502/23502-g30.zip 23502-g30.docx> [retrieved on 20191222]
- ANONYMOUS: "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, vol. SA WG2, no. V16.3.0, 22 December 2019 (2019-12-22), pages 1 - 558, XP051840932
- ERICSSON: "Remaining issues for Capability ID", 3GPP DRAFT; R2-1915759, vol. RAN WG2, 8 November 2019 (2019-11-08), Reno, USA, pages 1 - 4, XP051817348
- ZTE CORPORATION, SANECHIPS: "UE radio capability ID exchange over X2/Xn and S1/NG interface", 3GPP DRAFT; R2-1915079, vol. RAN WG2, 7 November 2019 (2019-11-07), Reno, USA, pages 1 - 13, XP051815795
- ZTE CORPORATION, SANECHIPS: "Introduction of UE radio capability ID in inter-node RRC messages", 3GPP DRAFT; R2-1915080, vol. RAN WG2, 7 November 2019 (2019-11-07), Reno, USA, pages 1 - 7, XP051815796

## Description

### TECHNICAL FIELD

The disclosure relates to an apparatus and method for processing radio access information in a wireless communication system.

### BACKGROUND ART

To meet the increasing demand with respect to wireless data traffic after the commercialization of 4th generation (4G) communication systems, efforts have been made to develop 5th generation (5G) or pre-5G communication systems. For this reason, 5G or pre-5G communication systems are called 'beyond 4G network' communication systems or 'post Long Term Evolution (post-LTE)' systems.

A 5G communication system defined in the 3GPP is called a new radio (NR) system. 5G communication systems consider radio wave transmission/reception in an ultra-high frequency or millimeter-wave (mmWave) band (e.g., a 60 GHz band) in order to achieve high data rates and apply various technologies such as beamforming, massive multiple-input and multiple-output (massive MIMO), full-dimension MIMO (FD-MIMO), array antennas, analog beamforming, and large-scale antennas for radio wave transmission/reception in order to reduce the path loss of radio waves and increase the transmission distance of radio waves in the ultra-high frequency band.

To improve system networks for 5G communication systems, various technologies such as evolved small cells, advanced small cells, cloud radio access networks (cloud RAN), ultra-dense networks, device-to-device (D2D) communication, wireless backhaul, moving networks, cooperative communication, coordinated multi-points (CoMP), and received-interference cancellation have been developed. In addition, for 5G communication systems, advanced coding modulation (ACM) technologies such as hybrid frequency-shift keying (FSK) and quadrature amplitude modulation (QAM) (FQAM) and sliding window superposition coding (SWSC), and advanced access technologies such as filter bank multi-carrier (FBMC), non-orthogonal multiple access (NOMA), and sparse code multiple access (SCMA), have been developed.

As various technologies may be applied according to the above features and the development of wireless communication systems, a scheme for efficiently managing the wireless communication systems through the various technologies has been required. The disclosure relates to an apparatus and method for processing radio access information in an inter-RAT or intra-RAT situation for efficient management of a wireless communication system.

EP 4021074 A1 discloses a method of transmitting UE radio information, in which the source 5G RAN transmits a handover required message to the source AMF, the source AMF transmits UE radio information to the target MME, the target MME verifies whether there is UE radio capability information in which the network knows about the UE, the target MME transmits a handover request message to a target eNB when information the target MME has and information the UE has do not match, the target eNB generates a transparent container and the source 5G RAN transmits the handover command to the UE.

ANONYMOUS: "3rd Generation Partnership Project; Technical Specification Group Services and System Aspects; Procedures for the 5GS; Stage 2 (Release 16)", 3GPP STANDARD; TECHNICAL SPECIFICATION; 3GPP TS 23.502, vol. SA WG2, no. V16.3.0, 22 discloses the T-AMF checks pre-stored existing PLMN based radio capabilities of the UE with the received UE capabilities received from the S-AMF, triggering the handover request message according when both information does not match, considering their version.

WO 2020001754 A1 discloses a method performed by a PLMN, wherein that the PLMN obtains information of the UE comprising whether the UE has the latest or most up to date UE capability information; the UE provides the PLMN with information of UE capability by providing capability information to base station, and the capability information may be used for handover; the obtained information may also comprise capability information of the UE matching the form version the UE stores for the PLMN; and the PLMN 400 sends a UE capability information form to the UE.

### DESCRIPTION OF EMBODIMENTS

### TECHNICAL PROBLEM

The disclosure relates to an apparatus and method for processing radio access information in a wireless communication system. Particularly, an embodiment of the disclosure relates to an apparatus and method for processing radio access information in an inter-RAT or intra-RAT situation or in a 5G-4G interworking situation. Also, another embodiment of the disclosure relates to an apparatus and method for processing a NAS for processing radio access information.

### SOLUTION TO PROBLEM

The disclosure relates to a method and apparatus for processing access information in a wireless communication system as defined by the appended set of claims.

### ADVANTAGEOUS EFFECTS OF DISCLOSURE

According to an embodiment of the disclosure, radio access information may be efficiently processed in an inter-RAT or intra-RAT situation of a wireless communication system.

### BRIEF DESCRIPTION OF DRAWINGS

FIG. 1 is a diagram for describing a structure of a wireless communication system according to an embodiment of the disclosure.
FIG. 2 is a flowchart for describing a method by which a network entity processes radio access information in a wireless communication system, according to an embodiment.
FIG. 3 is a diagram for describing a method of transmitting UE radio information when a terminal performs a handover from the 5G system to the 4G system in an environment where the 5G system and the LTE system coexist, according to an embodiment of the disclosure.
FIG. 4 is a flowchart for describing a method of processing radio access information of a UE in a wireless communication system, according to an embodiment of the disclosure.
FIG. 5 is a diagram for describing a NAS message information processing and communication method in the 5G network environment, according to an embodiment of the disclosure.
FIG. 6 is a diagram for describing a NAS message information processing and communication method in the 5G network environment, according to an embodiment of the disclosure.
FIG. 7 is a diagram for describing a structure of a wireless communication system according to an embodiment of the disclosure.
FIG. 8 is a flowchart for describing a method by which a UE processes radio access-related information in a wireless communication system, according to an embodiment.
FIG. 9 is a flowchart for describing a procedure for processing radio access-related information in the 5G network environment by using a NAS message, according to an embodiment of the disclosure.
FIG. 10 is a flowchart for describing a procedure for processing radio access-related information in the 5G network environment by using a NAS message, according to an embodiment of the disclosure.
FIG. 11 is a diagram illustrating a configuration of a UE according to an embodiment of the disclosure.
FIG. 12 is a diagram illustrating a configuration of a network entity according to an embodiment of the disclosure.

### BEST MODE

According to an embodiment, a method, performed by a target network entity, of performing communication in a wireless communication system includes: receiving radio capability information of a user equipment (UE) from a source network entity when a handover of the UE is determined; identifying whether the received radio capability information of the UE matches radio capability information of the UE allocated from a public land mobile network (PLMN); and when the received radio capability information of the UE does not match the radio capability information of the UE allocated from the PLMN, transmitting a handover request message including the radio capability information of the UE allocated from the PLMN to a target base station, wherein the radio capability information of the UE allocated from the PLMN is transmitted to the UE by being included in a container generated by the target base station.

In the method, the radio capability information of the UE may include information about a radio capability identifier of the UE and a version of the radio capability identifier of the UE, and the identifying of whether the received radio capability information of the UE matches the radio capability information of the UE allocated from the PLMN may include identifying whether a version of the received radio capability identifier of the UE matches a version of the radio capability identifier of the UE allocated from the PLMN.

In the method, the identifying of whether the received radio capability information of the UE matches the radio capability information of the UE allocated from the PLMN may include comparing a least significant bit (LSB) of the received radio capability information of the UE with an LSB of the radio capability information of the UE allocated from the PLMN.

In the method, radio capability information of the UE stored in the UE may be updated with the radio capability information of the UE allocated from the PLMN.

According to an embodiment, a method, performed by a user equipment (UE), of performing communication in a wireless communication system includes: transmitting a registration request including radio capability information of the UE to a source base station; when a handover of the UE is determined in the source base station, receiving, from the source base station, a handover command including radio capability information of the UE allocated from a public land mobile network (PLMN), based on whether the transmitted radio capability information of the UE in a target network entity matches the radio capability information of the UE allocated from the PLMN; and when the handover command is received, updating the radio capability information of the UE with the capability information of the UE allocated from the PLMN.

In the method, the radio capability information of the UE may include information about a radio capability identifier of the UE and a version of the radio capability identifier of the UE, and whether the transmitted radio capability information of the UE matches the radio capability information of the UE allocated from the PLMN may be determined based on whether a version of the transmitted radio capability identifier matches a version of the radio capability identifier of the UE allocated from the PLMN.

In the method, whether the transmitted radio capability information of the UE matches the radio capability information of the UE allocated from the PLMN may be determined based on a result of comparing a least significant bit (LSB) of the received radio capability information of the UE with an LSB of the radio capability information of the UE allocated by the target network entity.

### MODE OF DISCLOSURE

Hereinafter, embodiments of the disclosure will be described in detail with reference to the accompanying drawings. In describing the embodiments of the disclosure, descriptions of technical contents that are well known in the technical field to which the disclosure belongs and are not directly related to the disclosure will be omitted. This is to more clearly convey the subject matter of the disclosure without obscuration thereof by omitting unnecessary descriptions thereof.

For the same reason, some components in the accompanying drawings may be exaggerated, omitted, or schematically illustrated. Also, the size of each component may not completely reflect the actual size thereof. In the drawings, the same or corresponding elements may be given the same reference numerals.

The advantages and features of the disclosure and the accomplishing methods thereof will become apparent from the embodiments of the disclosure described below in detail with reference to the accompanying drawings. The disclosure may, however, be embodied in many different forms and should not be construed as being limited to the embodiments of the disclosure described below; rather, the present embodiments are provided to complete the disclosure and fully convey the scope of the disclosure to those of ordinary skill in the art and the disclosure will be defined only by the scope of the claims. Throughout the specification, like reference numerals may denote like elements.

It will be understood that each block of process flowchart diagrams and combinations of flowchart diagrams may be performed by computer program instructions.

Also, each block may represent a portion of a module, segment, or code including one or more executable instructions for executing one or more specified logical functions. Also, it should be noted that the functions mentioned in the blocks may also occur in a different order in some alternative implementation examples. For example, two blocks illustrated in succession may actually be performed substantially at the same time or may sometimes be performed in the opposite order depending on the corresponding function.

In this case, the term "unit" used in the present embodiments may refer to a software component or a hardware component such as a field programmable gate array (FPGA) or an application specific integrated circuit (ASIC) and the "unit" may perform certain functions. However, the "unit" is not limited to software or hardware. The "unit" may be configured to be in an addressable storage medium or may be configured to operate one or more processors. Thus, as an example, the "unit" may include components such as software components, object-oriented software components, class components, and task components and may include processes, functions, attributes, procedures, subroutines, segments of program code, drivers, firmware, microcode, circuits, data, databases, data structures, tables, arrays, and variables. A function provided by the components and "units" may be associated with the smaller number of components and "units" or may be further divided into additional components and "units". In addition, the components and "units" may be implemented to operate one or more central processing units (CPUs) in a device or a security multimedia card. Also, in embodiments, the "unit" may include one or more processors.

In the following description, terms for identifying access nodes, terms referring to network entities, terms referring to network functions, terms referring to messages, terms referring to interfaces between network entities, terms referring to various identification information, and the like are used for convenience of description. Thus, the disclosure is not limited to the terms used below and other terms referring to objects having equivalent technical meanings may be used.

In the following description, terms and names defined in the 3rd generation partnership project long term evolution (3GPP LTE) standards or modified terms and names based thereon may be used for convenience of description. However, the disclosure is not limited to the above terms and names and may also be similarly applied to systems according to other standards. In the disclosure, eNB may be used interchangeably with gNB for convenience of description. That is, a base station described as an eNB may represent a gNB. Herein, the term "terminal" may refer to various wireless communication devices in addition to mobile phones, NB-loT devices, and sensors.

That is, in particularly describing the embodiments of the disclosure, the communication standards defined in 3GPP will be mainly targeted; however, the subject matter of the disclosure may also be applied to other communication systems having similar technical backgrounds with some modifications without materially departing from the scope of the disclosure, which may be possible by the judgment of those of ordinary skill in the technical field of the disclosure.

In the 5G or NR system, an access and mobility management function (AMF), which is a management entity managing the mobility of a terminal, and a session management function (SMF), which is an entity managing a session, are separated. Unlike in the 4G LTE communication system in which a mobility management entity (MME) performs both mobility management and session management, in the 5G or NR system, because an entity performing mobility management and an entity performing session management are separated, a communication method and a communication management method may change between a terminal and a network entity.

In the 5G or NR system, when the terminal accesses the network through non-3GPP access, mobility management may be performed through the AMF through a non-3GPP interworking function (N3IWF) and session management may be performed through the SMF. Also, the AMF may process security-related information that is an important factor in mobility management.

As described above, in the 4G LTE system, the MME may perform both mobility management and session management. In the 5G or NR system, a non-standalone architecture for performing communication by using the network entity of the 4G LTE system together may be supported. In the 5G or NR system, communication may be performed more seamlessly because radio access-related information is provided to the UE from the network.

However, when the communication method according to the 5G or NR system is performed by the network (e.g., 4G, LTE, or 3G system) before the 5G or NR system, a basic function may be supported but the UE may not be able to efficiently process full information in a radio section as the UE processes radio access-related information within the 5G system.

This problem may occur even when a network of which capability of handling UE-related radio access information is upgraded and a network of which capability of handling UE-related radio access information is not upgraded coexist in a network capable of handling UE-related radio access information.

Thus, herein, in a network capable of handling radio access-related information and a network incapable of handling radio access-related information or in an environment where the capability of handling radio access-related information differs between the systems in the case of being capable of handling radio access-related information,
when the UE moves between the networks, the above problem may be solved by performing communication by using the non-access stratum (NAS) protocol. Also, through protocol efficiency, network communication performance may be improved and communication may be efficiently performed.

Through the disclosure, when there is a network entity supporting radio access information in a wireless communication system, when there is a network entity not supporting radio access information, or when there is a network entity having a different capability of processing radio access information, provided are a method and apparatus by which, when the UE communicates with the network entity, the UE and the network can efficiently perform communication by well processing radio access-related information.

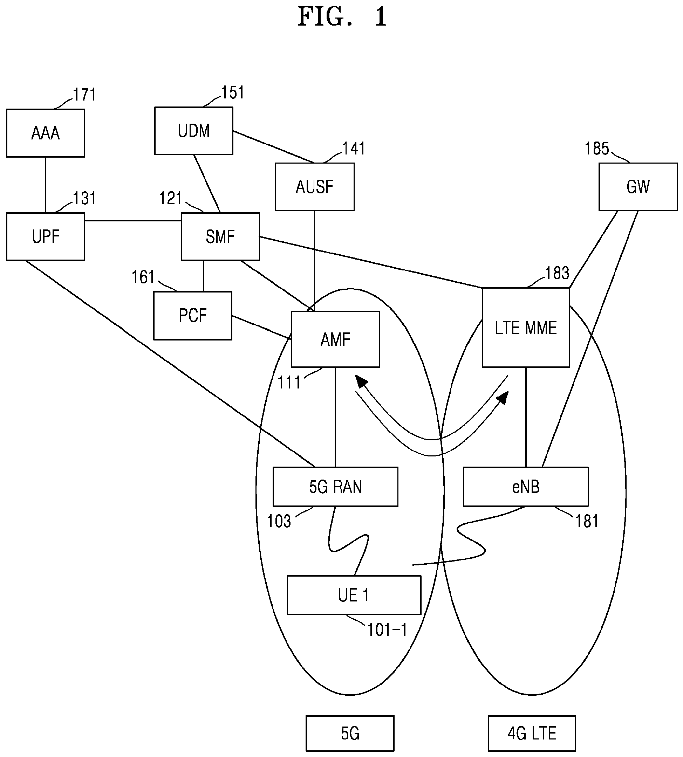

FIG. 1 is a diagram for describing a structure of a wireless communication system according to an embodiment of the disclosure.

Referring to FIG. 1, a 5G or NR core network may include network functions (NFs) such as a user plane function (UPF) 131, a session management function (SMF) 121, an access and mobility management function (AMF) 111, a 5G radio access network (RAN) 103, a user data Management (UDM) 151, and a policy control function (PCF) 161.

Also, for authentication of entities corresponding respectively to such NFs, entities such as an authentication server function (AUSF) 141 and an authentication, authorization, and accounting (AAA) 171 may be included in the wireless communication system.

When communicating through 3GPP access, a user equipment (UE) (terminal) 101-1 may access the 5G core network through a base station (5G RAN, radio access network, or base station (BS)) 103. Moreover, when the UE 101-1 communicates through non-3GPP access, there may be an N3 interworking function (N3IWF), session management may be controlled through the UE, non-3GPP access, N3IWF, and/or SMF, and mobility management may be controlled through the UE, non-3GPP access, N3IWF, and/or AMF.

In the 5G or NR system, an entity performing mobility management and session management may be separated into the AMF 111 and the SMF 121. Moreover, the 5G or NR system may support a standalone deployment structure performing communication only with 5G or NR entities and a non-standalone deployment structure using 4G entities and 5G or NR entities together.

Although a network of 5G or 4G LTE is assumed as a communication network on which the disclosure is based, it may also be applied when the same concept is applied to other systems within the range that may be understood by those of ordinary skill in the art.

When the UE moves between the network entity of 5G and the network entity of LTE, the radio access capability identity of a target network entity to which it is to move and the radio access capability identity of the UE may not match each other.

Moreover, when the UE moves from 5G to LTE or from LTE to 5G,
when the radio access-related information of the network entity of the network to which it has moved is old or new,
each of the AMF, MME, or UE may not identify whether each radio access information thereof is synchronized with and match each other. Thus, in this case, abnormal case handling such as synchronizing radio connection-related information between the UE and the AMF or the MME may be required.

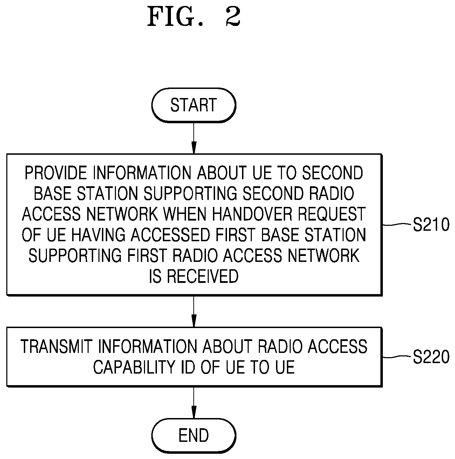

FIG. 2 is a flowchart for describing a method by which a network entity processes radio access information in a wireless communication system, according to an embodiment.

In operation S210, the network entity may provide information about the UE to a second base station supporting a second radio access network when a handover request of the UE having accessed a first base station supporting a first radio access network is received. For example, the network entity may provide information about the UE to the second base station through a handover request message. The handover request message may include at least one of PLMN assigned UE radio capability identity information, a parameter including a PLMN assigned UE radio capability version (information element), a UE radio capability information identity, or a UE radio capability-related parameter. Here, the first radio access network and the second radio access network may be different from each other, and for example, the first radio access network may be an NR network and the second radio access network may be an LTE network; however, this is merely an example and the type of the radio access network is not limited to thereto.

In operation S220, the network entity may transmit information about the radio access capability ID of the UE to the UE.

In the process of performing a handover, the network entity may receive and acquire UE radio information (e.g., UE radio capability information identity and related information) from the network entity (e.g., target MME) of the second base station and UE related information from the second base station through a transparent container. The network entity may transmit information about the radio access capability ID of the UE to the UE through, for example, a security command or a tracking area update message.

A target base station may receive terminal radio access capability (UE radio capability) information and version information about terminal radio access capability ID (UE radio capability ID) from a target MME. Also, the target base station may generate a transparent container including the terminal radio access capability information and the terminal radio access capability ID information received from the MME. The target base station may transmit the generated transparent container to a source base station. The generated transparent container may be transmitted from the source base station to the terminal.

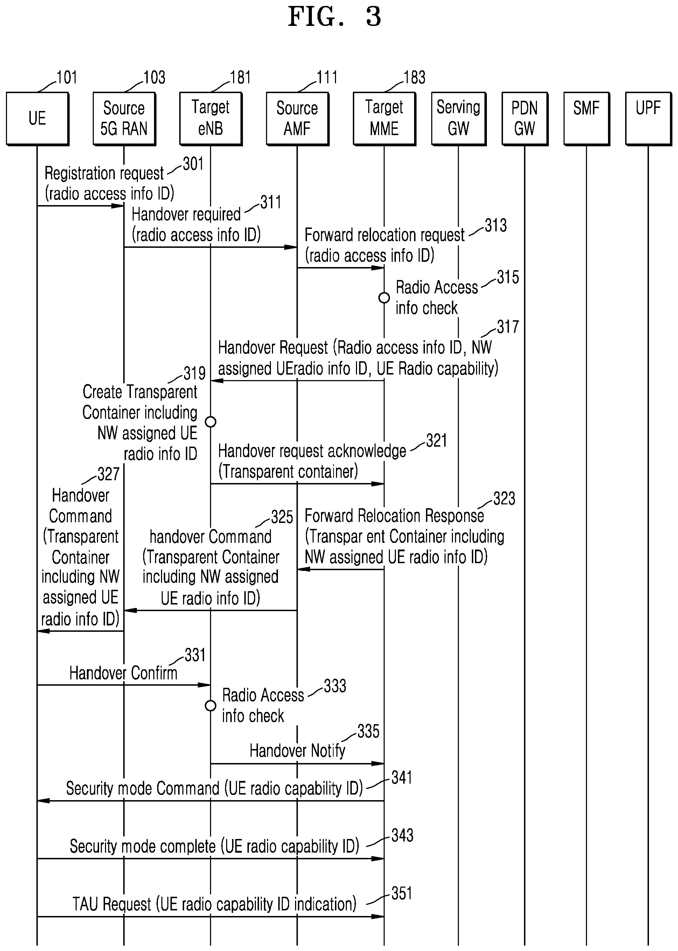

FIG. 3 is a diagram for describing a method of transmitting UE radio information when a terminal performs a handover from the 5G system to the 4G system in an environment where the 5G system and the LTE system coexist, according to an embodiment of the disclosure.

In operation 301, a UE 101 transmits a registration request to the AMF.

In this case, when the UE is a terminal that supports transmission of UE radio information (e.g., UE radio capability information identity), the UE transmits a registration request NAS message including UE radio information ID (identity) (e.g., UE radio capability ID (identity)). For example, the UE radio capability identity information IE may include a UE radio capability identity information value part as an information element and may be configured as illustrated in Table 1 below.

In an embodiment, the UE radio capability identity information may be a manufacturer ID such as an identifier assigned to a product by each manufacturer. In another embodiment, the UE radio capability identity information may be PLMN-related network assigned or PLMN assigned UE radio information or PLMN assigned UE radio capability information assigned to the UE by accessing the network.

In an embodiment, as illustrated in Tables 1 and 2, the radio capability identity information may include version information about the information. The version information may be included as a separate information element or may be included as a portion of the radio capability identity information.

**<Table 1>**

| | | | | | | | | |
|---|---|---|---|---|---|---|---|---|
| 8 | 7 | 6 | 5 | 4 | 3 | 2 | 1 | |
| UE radio capability identity information IEI | | | | | | | | octet 1 |
| UE radio capability identity information value | | | | | | | | octet 2 |
| | | | | | | | | octet 5 |
| UE radio capability identity version | | | | | | | | Octet 6 |

**<Table 2>**

| | | | | | | | | |
|---|---|---|---|---|---|---|---|---|
| 8 | 7 | 6 | 5 | 4 | 3 | 2 | 1 | |
| UE radio capability identity version IEI | | | | | | | | octet 1 |
| UE radio capability identity version value | | | | | | | | octet 2 |

In operation 311, a source 5G RAN 103 transmits a handover required message to a source AMF 111.

In this case, the UE radio information (e.g., UE radio capability information identity) is transmitted from the 5G RAN 103 to the AMF 111.

In operation 313, the source AMF 111 transmits a forward relocation request message to a target MME 183. In this case, the source AMF 111 includes the UE radio information (e.g., UE radio capability information identity) received from the UE 101 in the forward relocation request message and transmit the same.

In operation 315, the target MME 183 identifies whether there is UE radio capability information pre-known with respect to the UE 101, based on the UE radio capability information transmitted by the UE 101. That is, it is identified whether the target MME 183 already includes information about the UE 101, for example, UE radio capability information or UE manufacturer identity or UE radio information pre-transmitted by the UE 101. Also, when the information about the UE 101 is included, it may also be identified whether the information included with respect to the UE 101 matches the information transmitted by the network.

Also, in operation 315, the target MME 183 generates network assigned PLMN associated UE radio information (e.g., network assigned UE radio information, PLMN assigned UE radio information, or PLMN assigned UE radio capability identity information IE (information element)) and allocate the same to the UE. This operation is performed when the information included in the target MME 183 does not match the information included in the UE 101 or when the target MME 183 intends to allocate the PLMN assigned UE radio information to the UE 101.

For example, the PLMN assigned UE radio capability identity information IE may be configured as illustrated in Table 3 below to include a PLMN assigned UE radio capability identity information value part in the information element.

In an embodiment, as illustrated in Tables 3 and 4, the radio capability identity information includes version information about the information. The version information may be included as a separate information element or may be included as a portion of the radio capability identity information. However, the version information described above is merely an example for identifying whether to update the UE radio capability information, the UE manufacturer identity, or the UE radio information, and it may be determined whether the information is old or new, through a process of comparing the code (e.g., LSB) of the information itself.

**<Table 3>**

| | | | | | | | | |
|---|---|---|---|---|---|---|---|---|
| 8 | 7 | 6 | 5 | 4 | 3 | 2 | 1 | |
| PLMN assigned UE radio capability identity information IEI | | | | | | | | octet 1 |
| PLMN assigned UE radio capability identity information value | | | | | | | | octet 2 |
| | | | | | | | | octet 5 |
| PLMN assigned UE radio capability identity version value | | | | | | | | Octet 6 |

**<Table 4>**

| | | | | | | | | |
|---|---|---|---|---|---|---|---|---|
| 8 | 7 | 6 | 5 | 4 | 3 | 2 | 1 | |
| PLMN assigned UE radio capability version information IEI | | | | | | | | octet 1 |
| PLMN assigned UE radio capability identity version value | | | | | | | | octet 2 |
| | | | | | | | | octet 5 |

In operation 317, the target MME 183 transmits a handover request message to a target eNB 181. The handover request message includes a parameter (information element) including at least one of the PLMN assigned UE radio capability identity information or the PLMN assigned UE radio capability version described above, the UE radio capability information identity, or UE radio capability-related parameters.

In operation 319, the target eNB 181 generates a transparent container. An information element (i.e., a parameter or information) included in the transparent container includes at least one of PLMN assigned UE radio capability identity information or PLMN assigned UE radio capability identity version information as information used or included in an RRC messages later.

In operation 321, the target eNB 181 transmits a handover request acknowledgment message to the target MME 813, and in this case, the transparent container generated in operation 319 is transmitted while including the PLMN assigned UE radio capability identity information or the PLMN assigned UE radio capability identity version information.

Thereafter, in operation 323, the target MME 183 transmits a forward relocation response message to the source AMF 111.

In operation 325, the source AMF 111 transmits a handover command to the source 5G RAN 103, and in this case, the transparent container generated in operation 319 is transmitted.

Thereafter, in operation 327, the source 5G RAN 103 transmits a handover command including the PLMN assigned UE radio capability identity information to the UE 103.

Moreover, the UE determines whether to update the radio access capability ID of the UE, based on information about the received radio access capability ID. The UE compares information about the radio access capability ID included in the UE with information about the received radio access capability ID and updates the radio access capability ID when they do not match each other or when the information included in the UE is old-version information.

Thereafter, in operation 331, the UE 101 may transmit a handover confirm to the target eNB 181.

In operation 333, the target eNB 181 may identify radio information capability information. Accordingly, the target eNB 181 may identify whether the information included in the 5G RAN matches the information included in the UE.

In operation 335, the target eNB 181 may transmit a handover notify message to the target MME 183.

In operation 341, the target MME 183 may transmit a security mode command message to the UE 101.

In operation 343, the UE 101 may transmit a security mode complete message including the UE radio capability information IE (information element) or the UE radio information-related IE to the target MME 183.

Thereafter, in operation 351, the UE 101 may transmit a tracking area update request message including the UE radio capability information element to the target AMF 183. In this case, the UE radio capability information included therein may be at least one of the PLMN assigned UE radio capability identity information or the PLMN assigned UE radio capability identity version information included in the UE 101. In another embodiment, the UE radio access capability information included in the UE may be the UE radio capability identity.

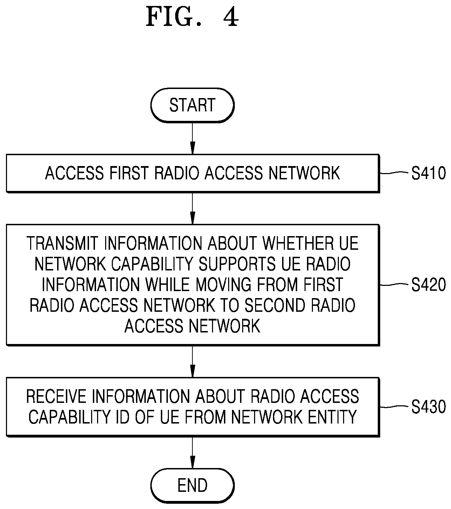

FIG. 4 is a flowchart for describing a method of processing radio access information of a UE in a wireless communication system, according to an embodiment of the disclosure.

In operation S410, the UE may connect to a first radio access network.

In operation S420, when the UE moves from the first radio access network to a second radio access network, the UE may transmit information about whether the UE network capability supports UE radio information. For example, the UE may transmit a tracking area update request to a network entity of the second radio access network while moving to the second radio access network.

In operation S430, the UE may receive information about the radio access capability ID of the UE from the network entity. In this case, the network entity may be an entity (e.g., MME) of the network to which the UE has moved. The network entity may determine the validity of the information by comparing the information received from the UE in operation S420 described above with the information of the UE already included therein.

The network entity may generate new information when the information is not valid as a result of the determination or when the network entity may provide PLMN assigned UE radio-related information (e.g., PLMN assigned UE radio identity-related information) to the UE. In this case, previous information included in the network entity and information newly generated or updated by the network entity may be divided into PLMN assigned UE radio capability identity and version. Alternatively, information about the version of the identity may be included in the PLMN assigned UE radio capability identity. In this case, a portion of the information of the PLMN assigned UE radio capability identity may include information about the version.

According to another example, when the information is not valid as a result of the determination, when the network entity may generate the PLMN assigned UE radio-related information (e.g., PLMN assigned UE radio identity-related information) or provide the stored related information to the UE, or when information about the UE is updated due to a change in algorithm in the network, the network entity may provide PLMN assigned UE radio-related information (e.g., PLMN assigned UE radio identity-related information) or PLMN assigned UE radio-related information or information about the version of the PLMN assigned UE radio identity by including the same in a tracking area update accept message. However, this is merely an example and the network entity may provide the information by including the same in a security mode command message.

Moreover, the UE may determine whether to update the radio access capability ID of the UE, based on information about the received radio access capability ID. The UE may compare information about the radio access capability ID included in the UE with information about the received radio access capability ID and may update the radio access capability ID when they do not match each other or when the information included in the UE is old-version information.

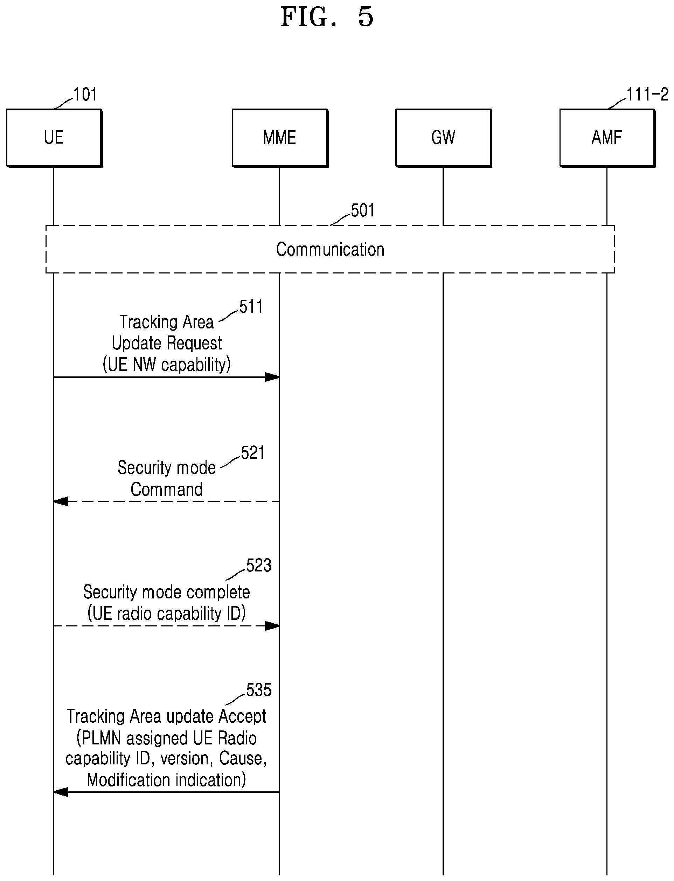

FIG. 5 is a diagram for describing a NAS message information processing and communication method in the 5G network environment, according to an embodiment of the disclosure.

In operation 501, a UE 101 may communicate with an AMF 111-2 and an SMF in the 5G network.

In operation 511, the UE 101 may move from the 5G network to the 4G network and perform a tracking area update request. In this case, when the UE 101 transmits a tracking area update to an MME, the UE 101 may inform the network whether the UE network capability supports UE radio information.

In operation 521, the MME may transmit a security mode command message to the UE 101.

In operation 523, when the UE 101 transmits a security mode complete message to the MME, the UE 101 may transmit UE radio capability identity-related information.

In operation 535, when the UE 101 transmits a tracking area update accept message to the MME, the UE 101 may transmit information such as PLMN assigned UE radio information, PLMN assigned UE radio identity version, UE radio information indication, cause, etc.

The MME may determine whether there is UE-related information in the MME with respect to the information transmitted by the UE 101 to the MME and whether the information is valid.

The MME may generate new information when the information is not valid as a result of the determination or when the MME can provide PLMN assigned UE radio-related information (e.g., PLMN assigned UE radio identity-related information) to the UE. According to another example, when the information is not valid as a result of the determination, when the MME can generate PLMN assigned UE radio-related information (e.g., PLMN assigned UE radio identity-related information) or provide the stored related information to the UE, the MME may provide PLMN assigned UE radio-related information (e.g., PLMN assigned UE radio identity-related information) by including the same in a tracking area update accept message transmitted by the MME to the UE. The information included in the tracking area update accept message may include at least one of the information illustrated in the following table.

**<Table 5> Tracking area update accept message**

| IEI | Information Element | Type/Reference | Presence | Format | Length |
|---|---|---|---|---|---|
| | Protocol discriminator | Protocol discriminator 9.2 | M | V | 1/2 |
| | Security header type | Security header type 9.3.1 | M | V | 1/2 |
| | Tracking area update accept message identity | Message type 9.8 | M | V | 1 |
| | EPS update result | EPS update result 9.9.3.13 | M | V | 1/2 |
| | Spare half octet | Spare half octet 9.9.2.9 | M | V | 1/2 |
| 5A | T3412 value | GPRS timer 9.9.3.16 | O | TV | 2 |
| 50 | GUTI | EPS mobile identity 9.9.3.12 | O | TLV | 13 |
| 54 | TAI list | Tracking area identity list 9.9.3.33 | O | TLV | 8-98 |
| 57 | EPS bearer context status | EPS bearer context status 9.9.2.1 | O | TLV | 4 |
| 13 | Location area identification | Location area identification 9.9.2.2 | O | TV | 6 |
| 23 | MS identity | Mobile identity 9.9.2.3 | O | TLV | 7-10 |
| 53 | EMM cause | EMM cause 9.9.3.9 | O | TV | 2 |
| | Radio info | Radio info | O | | |

Also, information about the radio information may be coded and interpreted as illustrated in Tables 6 and 7 below. For example, the radio information may include at least one of PLMN assigned UE radio capability information (e.g., PLMN assigned UE radio capability identity information) or PLMN assigned UE radio capability identity version information. As illustrated in Tables 6 and 7, the radio capability identity information may include version information about the information. The version information may be included as a separate information element or may be included as a portion of the radio capability identity information. However, the version information described above is merely an example for identifying whether to update the UE radio capability information, the UE manufacturer identity, or the UE radio information, and it may be determined whether the information is old or new, through a process of comparing the code (e.g., LSB) of the information itself.

According to another example, the radio information may include UE radio capability information (e.g., UE radio capability identity information) as illustrated in Tables 8 and 9.

That is, the UE radio capability information may be a value transmitted by the UE or may be a value allocated to the UE during the handover or mobility movement from the source network to the target network (e.g., the 4G network).

**<Table 6> Radio info IE, that is, PLMN assigned UE radio capability IE (information element)**

| | | | | | | | | |
|---|---|---|---|---|---|---|---|---|
| 8 | 7 | 6 | 5 | 4 | 3 | 2 | 1 | |
| PLMN assigned UE radio capability identity information IEI | | | | | | | | octet 1 |
| PLMN assigned UE radio capability identity information value | | | | | | | | octet 2 |
| | | | | | | | | octet 5 |
| PLMN assigned UE radio capability identity version value | | | | | | | | Octet 6 |

**<Table 7>**

| | | | | | | | | |
|---|---|---|---|---|---|---|---|---|
| 8 | 7 | 6 | 5 | 4 | 3 | 2 | 1 | |
| PLMN assigned UE radio capability version information IEI | | | | | | | | octet 1 |
| PLMN assigned UE radio capability identity version value | | | | | | | | octet 2 |
| | | | | | | | | octet 5 |

**<Table 8> Radio info IE**

| | | | | | | | | |
|---|---|---|---|---|---|---|---|---|
| 8 | 7 | 6 | 5 | 4 | 3 | 2 | 1 | |
| UE Radio capability information IEI | | | | | | | | octet 1 |
| UE Radio capability information length | | | | | | | | octet 2 |
| UE Radio capability information value | | | | | | | | octets 3-n |
| UE radio capability information version | | | | | | | | |

The radio information value of the radio-related information included in Table 8 may be coded and interpreted as illustrated in Table 9 below.

**<Table 9> Radio information value, UE radio capability information version**

| **UE Radio capability information value (octet 3 to octet n)** |
|---|
| It is information about UE Radio Capability Information. |

| **UE radio capability information version** |
|---|
| Information about Version of UE Radio Capability Information |

Also, when an error occurs, the UE 101 may be informed that the error has occurred, through an error code of the tracking area update accept message.

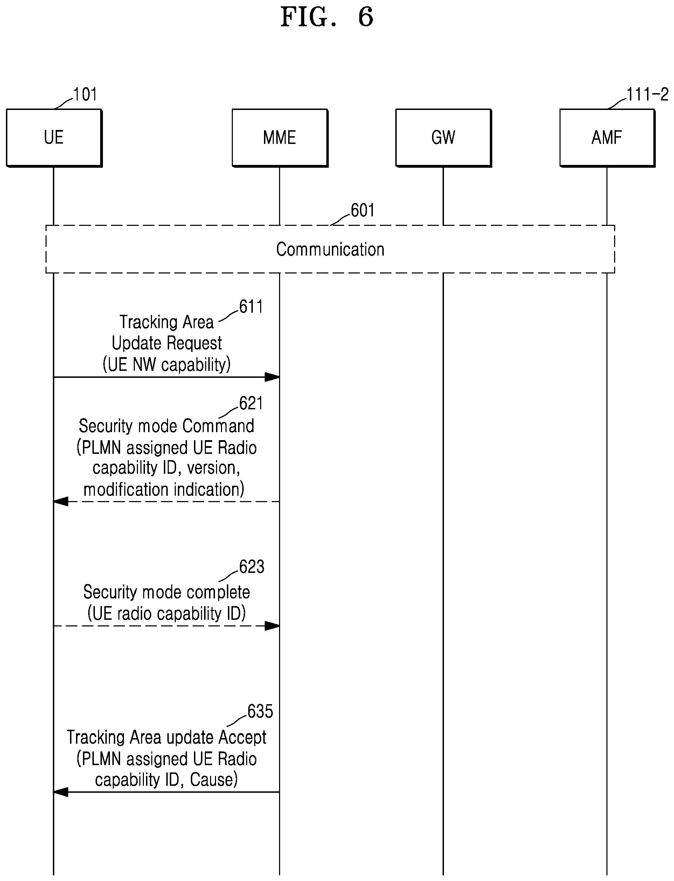

FIG. 6 is a diagram for describing a NAS message information processing and communication method in the 5G network environment, according to an embodiment of the disclosure.

In operation 601, a UE 101 may communicate with an AMF 111-2 and an SMF in the 5G network.

In operation 611, the UE 101 may move from the 5G network to the 4G network and perform a tracking area update request. In this case, the UE 101 may inform the network whether the UE network capability supports UE radio information while transmitting a tracking area update to an MME.

In operation 621, the MME may transmit a security mode command message to the UE 101. In this case, information such as PLMN assigned UE radio information, PLMN assigned UE radio identity version, UE radio information indication, and/or cause may be transmitted from the MME to the UE.

The MME may determine whether there is UE-related information in the MME with respect to the information transmitted by the UE 101 to the MME and whether the information is valid.

The MME may generate new information when the information is not valid as a result of the determination or when the MME can provide PLMN assigned UE radio-related information (e.g., PLMN assigned UE radio identity-related information) to the UE. According to another example, when the information is not valid as a result of the determination, when the MME can generate PLMN assigned UE radio-related information (e.g., PLMN assigned UE radio identity-related information) or provide the stored related information to the UE, the MME may provide PLMN assigned UE radio-related information (e.g., PLMN assigned UE radio identity-related information) by including the same in a security mode command message transmitted by the MME to the UE. The information included in the security mode command message may be at least one of the information illustrated in Table 10 below.

**<Table 10> Security mode command**

| **IEI** | **Information Element** | **Type/Reference** | **Presence** | **Format** | **Length** |
|---|---|---|---|---|---|
| | Protocol discriminator | Protocol discriminator | M | V | 1/2 |
| | | 9.2 | | | |
| | Security header type | Security header type | M | V | 1/2 |
| | | 9.3.1 | | | |
| | Security mode command message identity | Message type | M | v | 1 |
| | | 9.8 | | | |
| | Selected NAS security algorithms | NAS security algorithms | M | V | 1 |
| | | 9.9.3.23 | | | |
| | NAS key set identifier | NAS key set identifier | M | V | 1/2 |
| | | 9.9.3.21 | | | |
| | Spare half octet | Spare half octet | M | V | 1/2 |
| | | 9.9.2.9 | | | |
| | Replayed UE security capabilities | UE security capability | M | LV | 3-6 |
| | | 9.9.3.36 | | | |
| c- | IMEISV request | IMEISV request | O | TV | 1 |
| | | 9.9.3.18 | | | |
| 55 | Replayed nonce_{UE} | Nonce | O | TV | 5 |
| | | 9.9.3.25 | | | |
| 56 | Nonce_{MME} | Nonce | O | TV | 5 |
| | | 9.9.3.25 | | | |
| 4F | Hash_{MME} | Hash_{MME} | O | TLV | 10 |
| | | 9.9.3.50 | | | |
| 6F | Replayed UE additional security capability | UE additional security capability | O | TLV | 6 |
| | | 9.9.3.53 | | | |
| D- | UE radio capability ID request | UE radio capability ID request | O | TV | 1 |
| | | 9.9.3.59 | | | |
| | UE radio capability information | | O | | |

Also, information about the radio information may be coded and interpreted as illustrated in Tables 11 and 12 below. For example, the radio information may include at least one of PLMN assigned UE radio capability information (e.g., PLMN assigned UE radio capability identity information) or PLMN assigned UE radio capability identity version information. As illustrated in Tables 11 and 12, the radio capability identity information may include version information about the information. The version information may be included as a separate information element or may be included as a portion of the radio capability identity information. However, the version information described above is merely an example for identifying whether to update the UE radio capability information, the UE manufacturer identity, or the UE radio information, and it may be determined whether the information is old or new, through a process of comparing the code (e.g., LSB) of the information itself.

According to another example, the radio information may include UE radio capability information (e.g., UE radio capability identity information) as illustrated in Tables 13 and 14.

That is, the UE radio capability information may be a value transmitted by the UE or may be a value allocated to the UE during the handover or mobility movement from the source network to the target network (e.g., the 4G network).

**<Table 11> Radio info IE, that is, PLMN assigned UE radio capability IE (information element)**

| | | | | | | | | |
|---|---|---|---|---|---|---|---|---|
| 8 | 7 | 6 | 5 | 4 | 3 | 2 | 1 | |
| PLMN assigned UE radio capability identity information IEI | | | | | | | | octet 1 |
| PLMN assigned UE radio capability identity information value | | | | | | | | octet 2 |
| | | | | | | | | octet 5 |
| PLMN assigned UE radio capability identity version value | | | | | | | | Octet 6 |

**<Table 12>**

| | | | | | | | | |
|---|---|---|---|---|---|---|---|---|
| 8 | 7 | 6 | 5 | 4 | 3 | 2 | 1 | |
| PLMN assigned UE radio capability version information IEI | | | | | | | | octet 1 |
| PLMN assigned UE radio capability identity version value | | | | | | | | octet 2 |
| | | | | | | | | octet 5 |

**<Table 13>**

| | | | | | | | | |
|---|---|---|---|---|---|---|---|---|
| 8 | 7 | 6 | 5 | 4 | 3 | 2 | 1 | |
| UE Radio capability information IEI | | | | | | | | octet 1 |
| UE Radio capability information length | | | | | | | | octet 2 |
| UE Radio capability information value | | | | | | | | octets 3-n |
| UE radio capability information version | | | | | | | | |

The radio information value of the radio-related information included in Table 13 may be coded and interpreted as illustrated in Table 34 below.

**<Table 14> Radio information value, UE radio capability information version**

| |
|---|
| **UE Radio capability information value (octet 3 to octet n)** |
| It is information about UE Radio Capability Information. |
| **UE radio capability information version** |
| Information about Version of UE Radio Capability Information |

In operation 623, the UE 101 may transmit UE radio capability identity-related information while transmitting a security mode complete message to the MME.

In operation 635, the MME may transmit information of at least one of PLMN assigned UE radio information, PLMN assigned UE radio identity version, UE radio information indication, or cause while transmitting a tracking area update accept message to the UE.

The MME may determine whether there is UE-related information in the MME with respect to the information transmitted by the UE 101 to the MME and whether the information is valid.

The MME may generate new information when the information is not valid as a result of the determination or when the MME can provide PLMN assigned UE radio-related information (e.g., PLMN assigned UE radio identity-related information) to the UE. According to another example, when the information is not valid as a result of the determination, when the MME can generate PLMN assigned UE radio-related information (e.g., PLMN assigned UE radio identity-related information) or provide the stored related information to the UE, the MME may provide PLMN assigned UE radio-related information (e.g., PLMN assigned UE radio identity-related information) by including the same in a tracking area update accept message transmitted by the MME to the UE.

Also, when an error occurs, the UE 101 may be informed that the error has occurred, through an error code of the tracking area update accept message.

The information transmitted in the tracking area update accept message may correspond to the information included in the tracking area update accept message described above with reference to FIG. 5.

Unlike in the 4G LTE communication system where the MME performs both mobility management and session management, in the 5G or NR system, a communication method and a communication management method between the terminal and the network entity may be changed as an entity performing mobility management and session management is separated (e.g., separated into an AMF that is an entity managing mobility and an SMF that is an entity managing a session).

In the 5G or NR system, when the terminal accesses the network through non-3GPP access, mobility management may be performed through the AMF through a non-3GPP interworking function (N3IWF) and session management may be performed through the SMF. Also, the AMF may process security-related information that is an important factor in mobility management.

As described above, in the 4G LTE system, the MME may perform both mobility management and session management. In the 5G or NR system, a non-standalone architecture for performing communication by using the network entity of the 4G LTE system together may be supported. In the 5G or NR system, communication may be performed more seamlessly because radio access-related information is provided to the UE from the network.

However, when the communication method according to the 5G or NR system is performed by the network (e.g., 4G, LTE, or 3G system) before the 5G or NR system, a basic function may be supported but the UE may not be able to efficiently process full information in a radio section as the UE processes radio access-related information within the 5G system.

Moreover, this problem may occur even when a network of which capability of handling UE-related radio access information is upgraded and a network of which capability of handling UE-related radio access information is not upgraded coexist in a network capable of handling UE-related radio access information.

Thus, herein, in a network capable of handling radio access-related information and a network incapable of handling radio access-related information or in an environment where the capability of handling radio access-related information differs between the systems in the case of being capable of handling radio access-related information, when the UE moves between the networks or when an update occurs the entity of the network, the above problem may be solved by performing communication by using the non-access stratum (NAS) protocol. Also, through protocol efficiency, network communication performance may be improved and communication may be efficiently performed.

Through the disclosure, when there is a network entity supporting radio access information in a wireless communication system, when there is a network entity not supporting radio access information, or when there is a network entity having a different capability of processing radio access information, provided are a method and apparatus by which, when the UE communicates with the network entity, the UE and the network can efficiently perform communication by well processing radio access-related information.

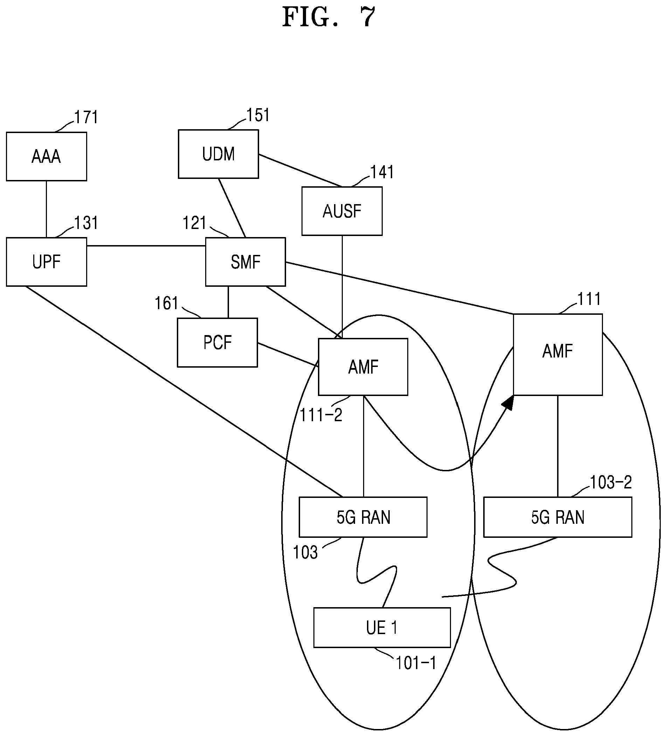

FIG. 7 is a diagram for describing a structure of a wireless communication system according to an embodiment of the disclosure.

Referring to FIG. 7, a core network of the wireless communication system according to an embodiment may include network functions (NFs) such as a user plane function (UPF) 131, a session management function (SMF) 121, an access and mobility management function (AMF) 111, a 5G radio access network (RAN) 103, a user data Management (UDM) 151, and a policy control function (PCF) 161.

Also, for authentication of entities corresponding respectively to such NFs, entities such as an authentication server function (AUSF) 141 and an authentication, authorization, and accounting (AAA) 171 may be included in the wireless communication system.

Hereinafter, a method of processing access information will be described assuming that the wireless communication system is a 5G communication system in the disclosure; however, this is merely an example and the method of processing access information according to the disclosure may also be applied to other communication systems.

When communicating through 3GPP access, a user equipment (UE) (terminal) 101-1 may access the 5G core network through a base station (5G RAN, radio access network, or base station (BS)) 103. Moreover, when the UE 101-1 communicates through non-3GPP access, there may be an N3 interworking function (N3IWF), session management may be controlled through the UE, non-3GPP access, N3IWF, and/or SMF, and mobility management may be controlled through the UE, non-3GPP access, N3IWF, and/or AMF.

In the 5G or NR system, an entity performing mobility management and session management may be separated into the AMF 111 and the SMF 121. Moreover, the 5G or NR system may support a standalone deployment structure performing communication only with 5G or NR entities and a non-standalone deployment structure using 4G entities and 5G or NR entities together.

Referring to FIG. 7, when the radio access-related information moves from a first AMF to a second AMF, it may not be detected whether the radio access-related information of the AMF and the radio access info of the UE are the same as each other. In this case, the first AMF may be a new AMF and the second AMF may be an old AMF. Alternatively, according to another example, when the information in the AMF is updated, the information between the AMF and the UE may be out of sync and thus abnormal case handling may be required thereon. As such, when the information between the UE and the AMF does not match, it may be necessary to synchronize the information of the UE and the information of the AMF or inform that it is old information of the UE or the AMF and perform a procedure of updating the same.

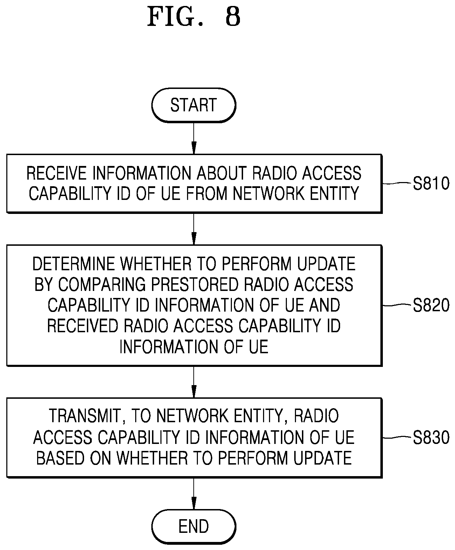

FIG. 8 is a flowchart for describing a method by which a UE processes radio access-related information in a wireless communication system, according to an embodiment.

In the present embodiment, a case in which a radio access capability ID as an example of radio access-related information is processed is described; however, this is merely an example and the radio access-related information is not limited to the radio access capability ID.

In operation S810, the UE may receive information about the radio access capability ID of the UE from the network entity. In this case, the network entity may be an AMF to which the UE intends to move. The network entity may receive information about the radio access capability ID of the UE from a network entity that the UE has previously accessed. However, this is merely an example and information about the radio access capability ID of the UE may be stored in the network entity when the UE has previously accessed the network entity.

Also, the information about the radio access capability ID may include at least one of the radio access capability ID or version information of the radio access capability ID.

In operation S820, the UE may determine whether to update the radio access capability ID by comparing the prestored radio access capability ID information of the UE with the received radio access capability ID information of the UE. The UE may determine whether to perform the update by comparing the version information of the radio access capability ID. However, this is merely an example and whether to perform the update may be determined by comparing the LSB of the radio access capability ID.

In operation S830, the UE may transmit, to the network entity, the radio access capability ID information of the UE based on whether to perform the update. When the radio access capability ID is updated, the UE according to an embodiment may transmit a message including information about the updated radio access capability ID to the network entity.

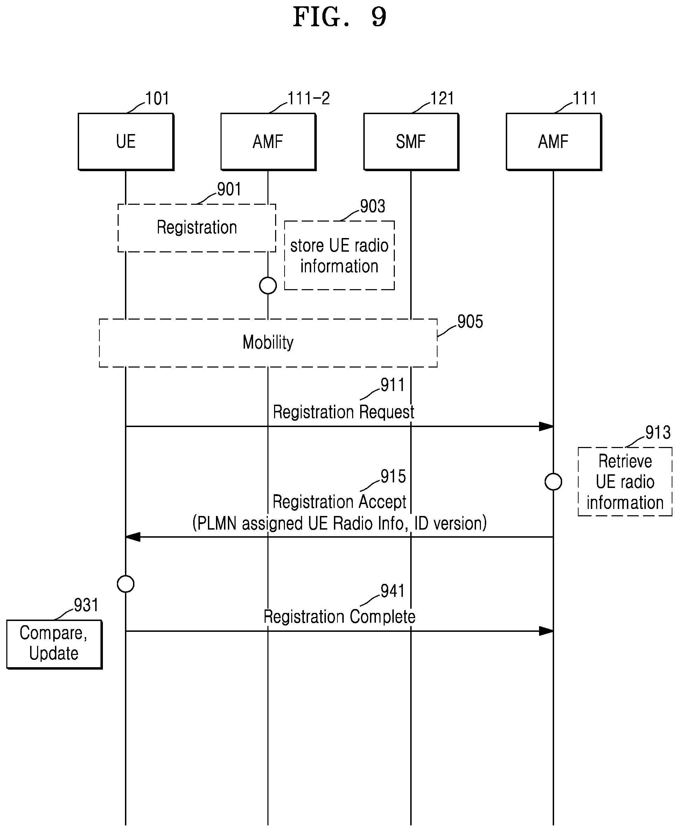

FIG. 9 is a flowchart for describing a procedure for processing radio access-related information in the 5G network environment by using a NAS message, according to an embodiment of the disclosure.

In operation 901, a UE may be in a state of being registered in an AMF-2 111-2.

In operation 903, the AMF-2 111-2 may be in a state of storing UE radio information about the UE. In operation 303, the AMF-2 111 - 2 may store the UE radio information received from the UE 101. In this case, the stored information may be information such as UE radio information or UE radio capability identity.

In operation 905, the UE may move to the AMF 111.

In this case, the AMF 111 may include information about the UE by receiving information about the UE from the AMF-2 111-2. Alternatively, it may include information about the UE when the UE has previously accessed the AMF.

In operation 305, the UE 101 may move from a source AMF to a target AMF. Hereinafter, for convenience of description, it will be described as the source AMF and the target AMF; however, each of the source AMF and the target AMF may be either the AMF-2 or the AMF.

Depending on the mobility of the UE 101, the UE radio information obtained by the target AMF may be different from the UE radio information stored in the UE 101 as follows.

Case 1) The 5G system may transmit UE radio information (e.g., information such as UE radio capability identity) from the source AMF to the target AMF. Thus, the target AMF may include information about the UE radio capability identity received from the source AMF.

Case 2) When the UE 101 has accessed the target AMF before accessing the source AMF, the target AMF may store UE-related information (e.g., UE radio information or UE radio capability identity) obtained when the UE 101 has accessed the target AMF before accessing the source AMF.

Case 3) The information received by the target AMF from the source AMF may replace the information prestored in the target AMF by being pre-registered in the target AMF by the UE. For example, the UE may delete the information prestored in the target AMF by pre-registering the same in the target AMF and store the UE radio capability identity received from the source AMF with respect to the UE.

Alternatively, in this case, by varying the version with respect to the information received from the source AMF and the information included by pre-accessing the target AMF, version information thereof may be managed even when the radio access capability-related ID of the UE is the same.

Case 4) The target AMF may separately store the information received from the source AMF and the information obtained by being pre-registered in the target AMF by the UE.

Alternatively, in this case, by varying the version with respect to the information received from the source AMF and the information included by pre-accessing the target AMF, version information thereof may be managed even when the radio access capability-related ID of the UE is the same.

Case 5) Even when the information prestored with respect to the UE and the radio access capability-related ID of the UE are the same due to a change in the algorithm in the AMF or a change in the policy about the information of the UE, the AMF may manage version information thereof differently.

In operation 911, the UE may transmit a registration request to the AMF to which it has moved.

According to an embodiment of the disclosure, in operation 911, the UE 101 may transmit a registration request to the AMF and perform registration. In this case, the UE 101 may transmit information such as UE radio information (e.g., UE radio capability identity (ID)) in a registration request message transmitted to the AMF. For example, a UE radio capability identity information element or the like may be included in the registration request message.

In operation 913, the AMF may inquire whether there is information about the UE and retrieve UE radio information when there is information about the UE. According to an embodiment of the disclosure, the AMF and the AMF-2 as network entities may include information about the UE, particularly information about radio access about the UE or information about radio access capability.

Also, it may include an identity (identifier) about radio access capability information for finding radio access-related information or radio access identity (identifier: ID) for finding information about radio access. This information may be changed for algorithm change, management, or the like in the network, and in order to manage this changed information, the network may manage related information about the UE with a version. Thus, in this case, the information about the UE may be inquired or referenced by using information about the version that may represent the latest or oldness degree of the information, together with radio access information of the UE or an identifier about information about the radio access capability. Also, what the latest radio access information of the UE may be determined by using information about the version. However, this is merely an example and the version of radio access information may be determined through LSB comparison of radio access capability information. According to an embodiment of the disclosure, when receiving the registration request from the UE 101, the AMF as one of the network entities may retrieve information about the UE 101 in order to determine whether there is information about the UE 101 before the received registration request. In this case, when synchronization is not performed between the information included in the UE 101 and the information included in the AMF or NR system, the AMF or NR system may generate new radio information. The UE 101 may transmit a registration request (registration request) again after registration in the 5G or NR system or the AMF 111. Also, after accessing the 5G system or the AMF and performing registration, the UE 101 may move to another network (AMF-2) and then again to the 5G system or the AMF. Also, in some cases, the UE 101 may move from the source AMF 111-2 to the 5G system target AMF 111 and receive UE-related context information from the previous source network AMF.

In another embodiment, in operation 913, the AMF may store the UE radio information received from the UE 101. In this case, the stored information may be information such as UE radio information or UE radio capability identity.

In operation 913, according to another embodiment, the AMF 111 may identify whether there is UE radio information (e.g., UE radio capability identity) about the UE 101 and compare whether the information included in the AMF 111 with respect to the UE 101 and the UE radio information (e.g., UE radio capability identity) transmitted by the UE 101 match or correspond to each other. When the compared information do not match or do not correspond to each other, the AMF 111 may generate new radio information about the UE 101 and delete the radio access capability about the UE 101 that it has previously included.

Moreover, according to another embodiment, the AMF 111 may generate new radio information about the UE 101 when the compared information do not match each other.

In operation 915, the AMF 111 may transmit a registration accept message to the UE 101 as illustrated in Table 15.

Also, in this case, in an embodiment, the AMF 111 may transmit newly-updated UE radio information (e.g., UE radio capability identity) to the UE 101 by including the same the registration accept message. For example, as illustrated in Table 16, information about the UE radio capability identity and the version about the UE radio capability may be transmitted together.

**<Table 15> Registration accept**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | | 9.2 | | | |
| | Security header type | Security header type | M | V | 1/2 |
| | | 9.3 | | | |
| | Spare half octet | Spare half octet | M | V | 1/2 |
| | | 9.5 | | | |
| | Registration accept message identity | Message type | M | V | 1 |
| | | 9.7 | | | |
| | 5GS registration result | 5GS registration result | M | LV | 2 |
| | | 9.11.3.6 | | | |
| 77 | 5G-GUTI | 5GS mobile Identity | O | TLV-E | 14 |
| | | 9.11.3.4 | | | |
| 4A | Equivalent PLMNs | PLMN list | O | TLV | 5-47 |
| | | 9.11.3.45 | | | |
| 54 | TAI list | 5GS tracking area identity list | O | TLV | 9-114 |
| | | 9.11.3.9 | | | |
| 15 | Allowed NSSAI | NSSAI | O | TLV | 4-74 |
| | | 9.11.3.37 | | | |
| 11 | Rejected NSSAI | Rejected NSSAI | O | TLV | 4-42 |
| | | 9.11.3.46 | | | |
| 31 | Configured NSSAI | NSSAI | O | TLV | 4-146 |
| | | 9.11.3.37 | | | |
| | | | | | |
| 6E | Negotiated extended DRX parameters | Extended DRX parameters | O | TLV | 3 |
| | | 9.11.3.26A | | | |
| 67 | UE radio capability ID | UE radio capability ID | O | TLV | 3-n |
| | | 9.11.3.68 | | | |
| | UE radio capability ID version | | O | | |
| 68 | UE radio capability ID deletion indication | UE radio capability ID deletion indication | O | TV | 1 |
| | | 9.11.3.69 | | | |
| 39 | Pending NSSAI | NSSAI | O | TLV | 4-74 |
| | | 9.11.3.37 | | | |
| 74 | Ciphering key data | Ciphering key data | O | TLV-E | x-n |
| | | 9.11.3.18C | | | |
| | UE radio capability ID handling indication | | o | | |

Also, Table 16 illustrates a scheme for coding the UE radio capability ID.

**<Table 16> UE radio capability ID**

| | | | | | | | | |
|---|---|---|---|---|---|---|---|---|
| 8 | 7 | 6 | 5 | 4 | 3 | 2 | 1 | |
| UE radio capability ID IEI | | | | | | | | octet 1 |
| Length of UE radio capability ID contents | | | | | | | | octet 2 |
| UE radio capability ID | | | | | | | | octet 3 |
| | | | | | | | | octet n |
| UE radio capability ID version | | | | | | | | octet n+1 |

Moreover, the AMF may inform the UE that the UE radio capability ID should be updated by using an information element referred to as an UE radio capability ID deletion indication transmitted to the UE.

**<Table 17>**

| | | | |
|---|---|---|---|
| UE radio capability ID deletion indication (octet 1) | | | |
| Bits | | | |
| **3** | **2** | **1** | |
| 0 | 0 | 0 | UE radio capability ID deletion not requested |
| 0 | 0 | 1 | Network-assigned UE radio capability IDs deletion requested |
| 0 | 1 | 0 | Network assigned UE radio capability IDs update requested |
| All other values are unused and shall be interpreted as "UE radio capability ID deletion not requested", if received by the UE. | | | |

Moreover, the AMF may inform the UE that the UE radio capability ID should be updated by using an information element referred to as an UE radio capability ID handling indication transmitted to the UE.

**<Table 18>**

| | | | |
|---|---|---|---|
| UE radio capability handling requested (octet 1) | | | |
| Bits | | | |
| **3** | **2** | **1** | |
| 0 | 0 | 0 | UE radio capability ID deletion not requested |
| 0 | 0 | 1 | Network-assigned UE radio capability IDs deletion requested |
| 0 | 1 | 0 | Network assigned UE radio capability IDs update requested |
| All other values are unused and shall be interpreted as "UE radio capability ID deletion not requested", if received by the UE. | | | |

In operation 931, the UE may compare information about the received network assigned UE radio capability identity (ID) and the version of the ID information and the information included in the UE and update the information to the latest information when the information included in the UE is old information.

Alternatively, the UE may compare information about the received PLMN assigned UE radio capability identity (ID) and the version of the ID information and the information included in the UE and update the information to the latest information when the information included in the UE is old information.

In operation 941, the UE 101 may transmit a registration complete message to the AMF 111.

In operation 941, the AMF 111 may store UE radio information when receiving the registration complete message from the UE 101. In this case, the stored UE radio information may be a UE radio capability identity, a manufacturer identity of the UE 101, a network assigned UE radio capability identity, a PLMN assigned UE radio capability identity, or a PLMN associated UE radio capability identity.

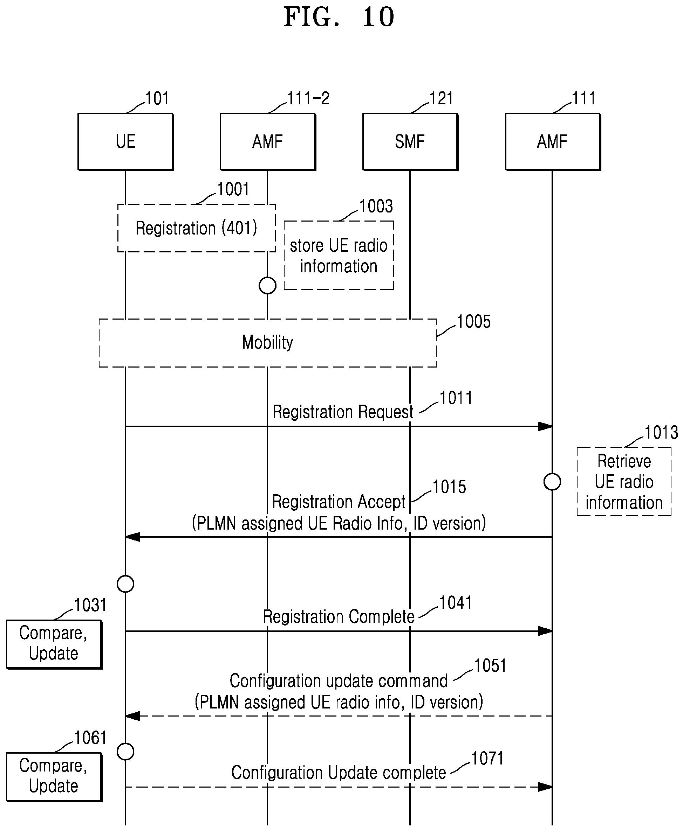

FIG. 10 is a flowchart for describing a procedure for processing radio access-related information in the 5G network environment by using a NAS message, according to an embodiment of the disclosure.

In operation 1001, a UE may be in a state of being registered in an AMF-2 111-2.

In operation 1003, the AMF-2 111-2 may be in a state of storing UE radio information about the UE. In operation 1003, the AMF-2 111 - 2 may store the UE radio information received from the UE 101. In this case, the stored information may be information such as UE radio information or UE radio capability identity.

In operation 1005, the UE may move to the AMF 111.

In this case, the AMF 111 may include information about the UE by receiving information about the UE from the AMF-2 111-2. Alternatively, it may include information about the UE when the UE has previously accessed the AMF.

In operation 1005, the UE 101 may move from a source AMF to a target AMF. Hereinafter, for convenience of description, it will be described as the source AMF and the target AMF; however, each of the source AMF and the target AMF may be either the AMF-2 or the AMF.

Depending on the mobility of the UE 101, the UE radio information obtained by the target AMF may be different from the UE radio information stored in the UE 101 as follows.

Case 1) The 5G system may transmit UE radio information (e.g., information such as UE radio capability identity) from the source AMF to the target AMF. Thus, the target AMF may include information about the UE radio capability identity received from the source AMF.

Case 2) When the UE 101 has accessed the target AMF before accessing the source AMF, the target AMF may store UE-related information (e.g., UE radio information or UE radio capability identity) obtained when the UE 101 has accessed the target AMF before accessing the source AMF.

Case 3) The information received by the target AMF from the source AMF may replace the information prestored in the target AMF by being pre-registered in the target AMF by the UE. For example, the UE may delete the information prestored in the target AMF by pre-registering the same in the target AMF and store the UE radio capability identity received from the source AMF with respect to the UE.

Alternatively, in this case, by varying the version with respect to the information received from the source AMF and the information included by pre-accessing the target AMF, version information thereof may be managed even when the radio access capability-related ID of the UE is the same.

Case 4) The target AMF may separately store the information received from the source AMF and the information obtained by being pre-registered in the target AMF by the UE.

Alternatively, in this case, by varying the version with respect to the information received from the source AMF and the information included by pre-accessing the target AMF, version information thereof may be managed even when the radio access capability-related ID of the UE is the same.

Case 5) Even when the information prestored with respect to the UE and the radio access capability-related ID of the UE are the same due to a change in the algorithm in the AMF or a change in the policy about the information of the UE, the AMF may manage version information thereof differently.

In operation 1011, the UE may transmit a registration request to the AMF to which it has moved.

According to an embodiment of the disclosure, in operation 1011, the UE 101 may transmit a registration request to the AMF and perform registration. In this case, the UE 101 may transmit information such as UE radio information (e.g., UE radio capability identity (ID)) in a registration request message transmitted to the AMF. For example, a UE radio capability identity information element or the like may be included in the registration request message.

In operation 1013, the AMF may inquire whether there is information about the UE and retrieve UE radio information when there is information about the UE.

According to an embodiment of the disclosure, the AMF and the AMF-2 as network entities may include information about the UE, particularly information about radio access about the UE or information about radio access capability. Also, it may include an identity (identifier) about radio access capability information for finding radio access-related information or radio access identity (identifier: ID) for finding information about radio access. This information may be changed for algorithm change, management, or the like in the network, and in order to manage this changed information, the network may manage related information about the UE with a version. Thus, in this case, the information about the UE may be inquired or referenced by using information about the version that may represent the latest or oldness degree of the information, together with radio access information of the UE or an identifier about information about the radio access capability. Also, what the latest radio access information of the UE may be determined by using information about the version. However, this is merely an example and the version of radio access information may be determined through LSB comparison of radio access capability information.

According to an embodiment of the disclosure, when receiving the registration request from the UE 101, the AMF as one of the network entities may retrieve information about the UE 101 in order to determine whether there is information about the UE 101 before the received registration request. In this case, when synchronization is not performed between the information included in the UE 101 and the information included in the AMF or NR system, the AMF or NR system may generate new radio information.

The UE 101 may transmit a registration request (registration request) again after registration in the 5G or NR system or the AMF 111. Also, after accessing the 5G system or the AMF and performing registration, the UE 101 may move to another network (AMF-2) and then again to the 5G system or the AMF.

Also, in some cases, the UE 101 may move from the source AMF 111-2 to the 5G system target AMF 111 and receive UE-related context information from the previous source network AMF.

In another embodiment, in operation 1013, the AMF may store the UE radio information received from the UE 101. In this case, the stored information may be information such as UE radio information or UE radio capability identity.

In operation 1013, according to another embodiment, the AMF 111 may identify whether there is UE radio information (e.g., UE radio capability identity) about the UE 101 and compare whether the information included in the AMF 111 with respect to the UE 101 and the UE radio information (e.g., UE radio capability identity) transmitted by the UE 101 match or correspond to each other. When the compared information do not match or do not correspond to each other, the AMF 111 may generate new radio information about the UE 101 and delete the radio access capability about the UE 101 that it has previously included.

Moreover, according to another embodiment, the AMF 111 may generate new radio information about the UE 101 when the compared information do not match each other.

In operation 1015, the AMF 111 may transmit a registration accept message to the UE 101 as illustrated in Table 11.

Also, in this case, in an embodiment, the AMF 111 may transmit newly-updated UE radio information (e.g., UE radio capability identity) to the UE 101 by including the same the registration accept message. For example, as illustrated in Table 19, information about the UE radio capability identity and the version about the UE radio capability may be transmitted together.

**<Table 19> Registration accept**

| **IEI** | **Information Element** | **Type/Reference** | **Presence** | **Format** | **Length** |
|---|---|---|---|---|---|
| | Extended protocol discriminator | Extended protocol discriminator | M | V | 1 |
| | | 9.2 | | | |
| | Security header type | Security header type | M | V | 1/2 |
| | | 9.3 | | | |
| | Spare half octet | Spare half octet | M | V | 1/2 |
| | | 9.5 | | | |
| | Registration accept message identity | Message type | M | V | 1 |
| | | 9.7 | | | |
| | 5GS registration result | 5GS registration result | M | LV | 2 |
| | | 9.11.3.6 | | | |
| 77 | 5G-GUTI | 5GS mobile identity | O | TLV-E | 14 |
| | | 9.11.3.4 | | | |
| 4A | Equivalent PLMNs | PLMN list | O | TLV | 5-47 |
| | | 9.11.3.45 | | | |
| 54 | TAI list | 5GS tracking area identity list | O | TLV | 9-114 |
| | | 9.11.3.9 | | | |
| 15 | Allowed NSSAI | NSSAI | O | TLV | 4-74 |
| | | 9.11.3.37 | | | |
| 11 | Rejected NSSAI | Rejected NSSAI | O | TLV | 4-42 |
| | | 9.11.3.46 | | | |
| 31 | Configured NSSAI | NSSAI | O | TLV | 4-146 |
| | | 9.11.3.37 | | | |
| | | | | | |
| 6E | Negotiated extended DRX parameters | Extended DRX parameters | O | TLV | 3 |
| | | 9.11.3.26A | | | |
| 67 | UE radio capability ID | UE radio capability ID | O | TLV | 3-n |
| | | 9.11.3.68 | | | |
| | UE radio capability ID version | | 0 | | |
| 68 | UE radio capability ID deletion indication | UE radio capability ID deletion indication | O | TV | 1 |
| | | 9.11.3.69 | | | |
| 39 | Pending NSSAI | NSSAI | O | TLV | 4-74 |
| | | 9.11.3.37 | | | |
| 74 | Ciphering key data | Ciphering key data | O | TLV-E | x-n |
| | | 9.11.3.18C | | | |
| | UE radio capability ID handling indication | | o | | |

Also, Table 20 illustrates a scheme for coding the UE radio capability ID.

**<Table 20> UE radio capability ID**

| | | | | | | | | |
|---|---|---|---|---|---|---|---|---|
| 8 | 7 | 6 | 5 | 4 | 3 | 2 | 1 | |
| UE radio capability ID IEI | | | | | | | | octet 1 |
| Length of UE radio capability ID contents | | | | | | | | octet 2 |
| UE radio capability ID | | | | | | | | octet 3 |
| | | | | | | | | octet n |
| UE radio capability ID version | | | | | | | | octet n+1 |

Moreover, the AMF may inform the UE that the UE radio capability ID should be updated by using an information element referred to as an UE radio capability ID deletion indication transmitted to the UE.

**<Table 21>**

| | | | |
|---|---|---|---|
| UE radio capability ID deletion indication (octet 1) | | | |
| Bits | | | |
| **3** | **2** | **1** | |
| 0 | 0 | 0 | UE radio capability ID deletion not requested |
| 0 | 0 | 1 | Network-assigned UE radio capability IDs deletion requested |
| 0 | 1 | 0 | Network assigned UE radio capability IDs update requested |
| All other values are unused and shall be interpreted as "UE radio capability ID deletion not requested", if received by the UE. | | | |

Moreover, the AMF may inform the UE that the UE radio capability ID should be updated by using an information element referred to as an UE radio capability ID handling indication transmitted to the UE.

**<Table 22>**

| | | | |
|---|---|---|---|
| UE radio capability handling requested (octet 1) | | | |
| Bits | | | |
| **3** | **2** | **1** | |
| 0 | 0 | 0 | UE radio capability ID deletion not requested |
| 0 | 0 | 1 | Network-assigned UE radio capability IDs deletion requested |
| 0 | 1 | 0 | Network assigned UE radio capability IDs update requested |
| All other values are unused and shall be interpreted as "UE radio capability ID deletion not requested", if received by the UE. | | | |

In operation 1031, the UE may compare information about the received network assigned UE radio capability identity (ID) and the version of the ID information and the information included in the UE and update the information to the latest information when the information included in the UE is old information.

Alternatively, the UE may compare information about the received PLMN assigned UE radio capability identity (ID) and the version of the ID information and the information included in the UE and update the information to the latest information when the information included in the UE is old information.

In operation 1041, the UE 101 may transmit a registration complete message to the AMF 111.

In operation 1041, the AMF 111 may store UE radio information when receiving the registration complete message from the UE 101. In this case, the stored UE radio information may be a UE radio capability identity, a manufacturer identity of the UE 101, a network assigned UE radio capability identity, a PLMN assigned UE radio capability identity, or a PLMN associated UE radio capability identity.

In operation 1051, the AMF 111 may transmit a configuration update command message to the UE 101 as illustrated in Table 23.

Also, in this case, in an embodiment, the AMF 111 may transmit newly-updated UE radio information (e.g., UE radio capability identity) to the UE 101 by including the same the configuration update command message. For example, as illustrated in Table 23, information about the UE radio capability identity and the version about the UE radio capability may be transmitted together.

**<Table 23> Configuration update command**

| **IEI** | **Information Element** | **Type/Reference** | **Presence** | **Format** | **Length** |
|---|---|---|---|---|---|
| | Extended protocol discriminator | Extended protocol discriminator | **M** | V | 1 |
| | | 9.2 | | | |
| | Security header type | Security header type | **M** | V | 1/2 |
| | | 9.3 | | | |
| | Spare half octet | Spare half octet | **M** | V | 1/2 |
| | | 9.5 | | | |
| | Configuration update command message identity | Message type | **M** | V | 1 |
| | | 9.7 | | | |
| D- | Configuration update indication | Configuration update indication | O | TV | 1 |
| | | 9.11.3.18 | | | |
| 77 | 5G-GUTI | 5GS mobile identity | O | TLV-E | 14 |
| | | 9.11.3.4 | | | |
| 54 | TAI list | 5GS tracking area identity list | O | TLV | 9-114 |
| | | 9.11.3.9 | | | |
| 9- | Network slicing indication | Network slicing indication | O | TV | 1 |
| | | 9.11.3.36 | | | |
| F- | SMS indication | SMS indication | O | TV | 1 |
| | | 9.11.3.50A | | | |
| 6C | T3447 value | GPRS timer 3 | O | TLV | 3 |
| | | 9.11.2.5 | | | |
| 75 | CAG information list | CAG information list | O | TLV-E | 3-n |
| | | 9.11.3.18A | | | |
| 67 | UE radio capability ID | UE radio capability ID | O | TLV | 3-n |
| | | 9.11.3.68 | | | |
| | UE radio capability ID version | | | o | |
| 68 | UE radio capability ID deletion indication | UE radio capability ID deletion indication | O | TV | 1 |
| | | 9.11.3.69 | | | |
| 44 | 5GS registration result | 5GS registration result | O | TLV | 3 |
| | | 9.11.3.6 | | | |
| | UE radio capability ID handling indication | | | o | |

**<Table 24> UE radio capability ID**

| | | | | | | | | |
|---|---|---|---|---|---|---|---|---|
| 8 | 7 | 6 | 5 | 4 | 3 | 2 | 1 | |
| UE radio capability ID IEI | | | | | | | | octet 1 |
| Length of UE radio capability ID contents | | | | | | | | octet 2 |
| UE radio capability ID | | | | | | | | octet 3 |
| | | | | | | | | octet n |
| UE radio capability ID version | | | | | | | | octet n+1 |

Moreover, the AMF may inform the UE that the UE radio capability ID should be updated by using an information element referred to as an UE radio capability ID deletion indication transmitted to the UE.

**<Table 25>**

| | | | |
|---|---|---|---|
| UE radio capability ID deletion indication (octet 1) | | | |
| Bits | | | |
| **3** | **2** | **1** | |
| 0 | 0 | 0 | UE radio capability ID deletion not requested |
| 0 | 0 | 1 | Network-assigned UE radio capability IDs deletion requested |
| 0 | 1 | 0 | Network assigned UE radio capability IDs update requested |
| All other values are unused and shall be interpreted as "UE radio capability ID deletion not requested", if received by the UE. | | | |

Moreover, the AMF may inform the UE that the UE radio capability ID should be updated by using an information element referred to as an UE radio capability ID handling indication transmitted to the UE.

**<Table 26>**

| | | | |
|---|---|---|---|
| UE radio capability handling requested (octet 1)⁻ | | | |
| Bits | | | |
| **3** | **2** | **1** | |
| 0 | 0 | 0 | UE radio capability ID deletion not requested. |
| 0 | 0 | 1 | Network-assigned UE radio capability IDs deletion requested |
| 0 | 1 | 0 | Network assigned UE radio capability IDs update requested |
| All other values are unused and shall be interpreted as UE radio capability ID deletion not requested", ifreceived by the UE. | | | |

In operation 1061, the UE may compare information about the received network assigned UE radio capability identity (ID) and the version of the ID information and the information included in the UE and update the information to the latest information when the information included in the UE is old information.

Alternatively, the UE may compare information about the received PLMN assigned UE radio capability identity (ID) and the version of the ID information and the information included in the UE and update the information to the latest information when the information included in the UE is old information.

In operation 1071, the UE 101 may transmit a configuration update complete message to the AMF 111.

In operation 1071, the AMF 111 may store UE radio information when receiving the configuration update complete message from the UE 101. In this case, the stored UE radio information may be a UE radio capability identity, a manufacturer identity of the UE 101, a network assigned UE radio capability identity, a PLMN assigned UE radio capability identity, or a PLMN associated UE radio capability identity.

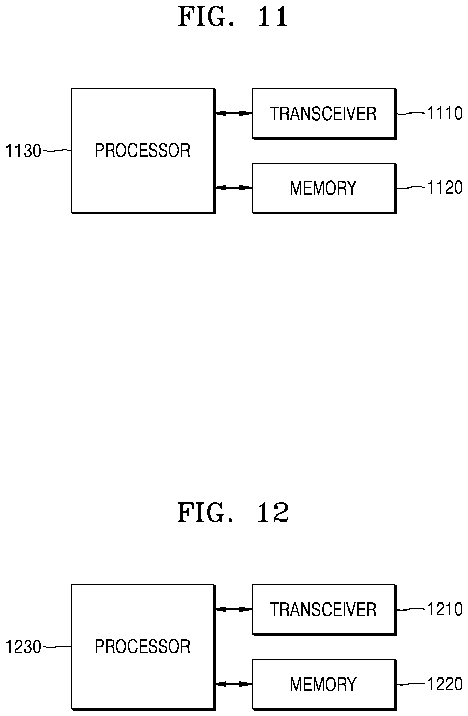

FIG. 11 is a diagram illustrating a configuration of a UE according to an embodiment of the disclosure.

As illustrated in FIG. 11, the UE of the disclosure may include a transceiver 1110, a memory 1120, and a processor 1130. The processor 1130, the transceiver 1110, and the memory 1120 of the UE may operate according to the above communication method of the UE. However, the components of the UE are not limited thereto. For example, the UE may include more components or fewer components than the above components. In addition, the processor 1130, the transceiver 1110, and the memory 1120 may be implemented as a single chip.

The transceiver 1110 may collectively refer to a receiver of the UE and a transmitter of the UE and may transmit/receive signals to/from a base station or a network entity. The signals transmitted/received to/from the base station may include control information and data. For this purpose, the transceiver 1110 may include, for example, an RF transmitter for up-converting and amplifying a transmitted signal and an RF receiver for low-noise-amplifying and down-converting a received signal. However, this is merely an embodiment of the transceiver 1110, and the components of the transceiver 1110 are not limited to the RF transmitter and the RF receiver.

Also, the transceiver 1110 may include a wired/wireless transceiver and may include various components for transmitting/receiving signals.

Also, the transceiver 1110 may receive a signal on a radio channel and output the signal to the processor 1130 and may transmit a signal output from the processor 1130, on a radio channel.

Also, the transceiver 1110 may receive a communication signal and output the same to the processor and may transmit a signal output from the processor to a network entity through a wired/wireless network.

The memory 1120 may store programs and data necessary for the operation of the UE. Also, the memory 1120 may store control information or data included in the signals obtained by the UE. The memory 1120 may include a storage medium or a combination of storage media such as ROM, RAM, hard disk, CD-ROM, and DVD.

The processor 1130 may control a series of processes such that the UE may operate according to the above embodiments of the disclosure. The processor 1130 may include one or more processors. For example, the processor 1130 may include a communication processor (CP) for performing control for communication and an application processor (AP) for controlling an upper layer such as an application program.

FIG. 12 is a diagram illustrating a configuration of a network entity according to an embodiment of the disclosure.

As illustrated in FIG. 12, the network entity of the disclosure may include a transceiver 1210, a memory 1220, and a processor 1230. The processor 1230, the transceiver 1210, and the memory 1220 of the network entity may operate according to the above communication method of the network entity. However, the components of the network entity are not limited thereto. For example, the network entity may include more components or fewer components than the above components. In addition, the processor 1230, the transceiver 1210, and the memory 1220 may be implemented as a single chip. The network entity may include network functions (NFs) such as an access and mobility management function (AMF), a session management function (SMF), a policy and charging function (PCF), a network exposure function (NEF), a unified data management (UDM), and a user plane function (UPF) described above. Also, the network entity may include a base station.

The transceiver 1210 may collectively refer to a receiver of the network entity and a transmitter of the network entity and may transmit/receive signals to/from the terminal or another network entity. In this case, the transmitted/received signals may include control information and data. For this purpose, the transceiver 1210 may include, for example, an RF transmitter for up-converting and amplifying a transmitted signal and an RF receiver for low-noise-amplifying and down-converting a received signal. However, this is merely an embodiment of the transceiver 1210, and the components of the transceiver 1210 are not limited to the RF transmitter and the RF receiver. The transceiver 1210 may include a wired/wireless transceiver and may include various components for transmitting/receiving signals.

Also, the transceiver 1210 may receive a signal on a communication channel (e.g., a radio channel) and output the signal to the processor 1230 and may transmit a signal output from the processor 1230, on a communication channel.

Also, the transceiver 1210 may receive a communication signal and output the same to the processor and may transmit a signal output from the processor to a terminal or a network entity through a wired/wireless network.

The memory 1220 may store programs and data necessary for the operation of the network entity. Also, the memory 1220 may store control information or data included in the signals obtained by the network entity. The memory 1220 may include a storage medium or a combination of storage media such as ROM, RAM, hard disk, CD-ROM, and DVD.

Also, the processor 1230 may control a series of processes such that the network entity may operate according to the above embodiments of the disclosure. The processor 1230 may include one or more processors. The methods according to the embodiments of the disclosure described in the specification or the claims may be implemented as hardware, software, or a combination thereof.

When the methods are implemented as software, a computer-readable storage medium may be provided to store one or more programs (software modules). The one or more programs stored in the computer-readable storage medium may be configured for execution by one or more processors in an electronic device. The one or more programs may include instructions for causing the electronic device to execute the methods according to the embodiments of the disclosure described in the specification or the claims.

These programs (software modules or software) may be stored in random access memories (RAMs), nonvolatile memories including flash memories, read only memories (ROMs), electrically erasable programmable ROMs (EEPROMs), magnetic disc storage devices, compact disc-ROMs (CD-ROMs), digital versatile discs (DVDs), other types of optical storage devices, or magnetic cassettes. Alternatively, the programs may be stored in a memory including any combination of some or all thereof. Also, each of the memories may be provided in plurality.

Also, the programs may be stored in an attachable storage device that may be accessed through a communication network such as Internet, Intranet, local area network (LAN), wide area network (WAN), or storage area network (SAN), or through a communication network configured by any combination thereof. Such a storage device may be connected through an external port to an apparatus performing an embodiment of the disclosure. Also, a separate storage device on a communication network may be connected to an apparatus performing an embodiment of the disclosure.

In particular embodiments of the disclosure described above, the components included in the disclosure are expressed in the singular or plural according to the particular embodiments of the disclosure. However, the singular or plural expressions are selected suitably according to the presented situations for convenience of description, the disclosure is not limited to the singular or plural components, and the components expressed in the plural may even be configured in the singular or the components expressed in the singular may even be configured in the plural.

While particular embodiments of the disclosure have been described above, it will be understood that various modifications may be made therein without departing from the scope of the disclosure. Therefore, the scope of the disclosure should not be limited to the described embodiments of the disclosure and should be defined by the following claims.

## Claims

1. A method, performed by a target mobility management entity, MME, (183) of performing communication in a wireless communication system in an inter-radio access technology, RAT, handover situation, the method comprising:
receiving (313) a forward relocation request comprising first user equipment, UE, radio capability information from a source access and mobility management function, AMF, (111);
identifying (315) that the target MME (183) does not include information matching the first UE radio capability information;
in case that the target MME (183) does not include the information matching the first UE radio capability information, allocating (315) second UE radio capability information to the UE (101), wherein the second UE radio capability information is public land mobile network, PLMN, assigned UE radio information;
transmitting (317) a handover request message including the first or the second UE radio capability information to a target eNB (181);
receiving (321), from the target eNB (181), a handover request acknowledge comprising a container that is generated by the target eNB (181) and includes the transmitted first or second UE radio capability information; and
transmitting (323) a forward relocation response comprising the container to the source AMF (111) to provide the container to the UE (101) through a source 5th generation radio access network, 5G RAN, (103),
wherein the first UE radio capability information comprises a first UE radio capability identifier and version information of the first UE radio capability identifier, and
wherein the second UE radio capability information comprises a second UE radio capability identifier and version information of the second UE radio capability identifier.

2. A method, performed by a user equipment, UE, (101) of performing communication in a wireless communication system in an inter-radio access technology, RAT, handover situation, the method comprising:
transmitting (301) a registration request including first UE radio capability information to a source 5th generation radio access network, 5G RAN, (103);
receiving (327), from the source 5G RAN (103), a handover command including a container that is generated by a target eNB (181) and includes the first or second UE radio capability information, wherein the second UE radio capability information is public land mobile network, PLMN, assigned UE radio information and the second UE radio capability information is allocated (315) from a target mobility management entity, MME, (183); and
updating the first UE radio capability information stored in the UE (101) based on the received first or second UE radio capability information,
wherein the first UE radio capability information comprises a first UE radio capability identifier and version information of the first UE radio capability identifier, and
wherein the second UE radio capability information comprises a second UE radio capability identifier and version information of the second UE radio capability identifier, and
wherein the method further comprises: determining to update the first UE radio capability information stored in the UE (101) in case that the version information of the first UE radio capability identifier stored in the UE (101) does not match the version information of the received first or second UE radio capability identifier.

3. The method of claim 2, comprising:
determining whether to update the first UE radio capability information stored in the UE based on a result of comparing a least significant bit, LSB, of the first UE radio capability information stored in the UE with an LSB of the received first or second UE radio capability information.

4. A target mobility management entity, MME, (183) in a wireless communication system in an inter-radio access technology, RAT, handover situation, the target MME (183) comprising:
a transceiver (1210); and
at least one processor (1230) configured to
receive (313) a forward relocation request comprising first user equipment, UE, radio capability information from a source access and mobility management function, AMF, (111),
identify (315) that the target MME (183) does not include information matching the first UE radio capability information,
in case that the target MME (813) does not include the information matching the first UE radio capability information, allocate (315) second UE radio capability information to the UE (101), wherein the second UE radio capability information is public land mobile network, PLMN, assigned UE radio information,
transmit (317) a handover request message including the first or the second UE radio capability information to a target eNB (181) through the transceiver,
receive (321), from the target eNB (181), a handover request acknowledge comprising a container that is generated by the target eNB (181) and includes the transmitted first or second UE radio capability information, and
transmit (323) a forward relocation response comprising the container to the source AMF (111) to provide the container to the UE (101) through a source 5th generation radio access network, 5G RAN, (103),
wherein the first UE radio capability information comprises a first UE radio capability identifier and version information of the first UE radio capability identifier, and
wherein the second UE radio capability information comprises a second UE radio capability identifier and version information of the second UE radio capability identifier.

5. A user equipment, UE, (101) in a wireless communication system in an inter-radio access technology, RAT, handover situation, the UE (101) comprising:
a transceiver (1110); and
at least one processor (1130) configured to
transmit (301) a registration request including first UE radio capability information to a source 5th generation radio access network, 5G RAN, (103) through the transceiver,
receive (327), from the source 5G RAN (103) through the transceiver, a handover command including a container that is generated by a target eNB (181) and includes the first or second UE radio capability information, wherein the second UE radio capability information is public land mobile network, PLMN, assigned UE radio information and the second UE radio capability information is allocated (315) from a target mobility management entity, MME, (183), and
update the first UE radio capability information stored in the UE (101) based on the received first or second UE radio capability information,
wherein the first UE radio capability information comprises a first UE radio capability identifier and version information of the first UE radio capability identifier,
wherein the second UE radio capability information comprises a second UE radio capability identifier and version information of the second UE radio capability identifier, and
wherein the at least one processor is further configured to determine to update the first UE radio capability information stored in the UE (101) in case that the version information of the first UE radio capability identifier stored in the UE (101) does not match the version information of the received first or second UE radio capability identifier.

6. The UE of claim 5, wherein the at least one processor is further configured to determine whether to update the first UE radio capability information stored in the UE based on a result of comparing a least significant bit, LSB, of the first UE radio capability information stored in the UE with an LSB of the received first or second UE radio capability information.

## Patentansprüche

1. Verfahren, das von einer Ziel-Mobilitätsmanagement-Entität, MME, (183) zum Durchführen einer Kommunikation in einem drahtlosen Kommunikationssystem in einer Inter-Radio-Access-Technology-, RAT, -Übergabesituation durchgeführt wird, wobei das Verfahren Folgendes umfasst:
Empfangen (313) einer Vorwärtsverlagerungsanforderung, die erste
Benutzerausrüstung-, UE, -Funkfähigkeitsinformationen umfasst, von einer Quellzugangs- und Mobilitätsmanagementfunktion, AMF, (111);
Identifizieren (315), dass die Ziel-MME (183) keine Informationen enthält, die mit den ersten UE-Funkfähigkeitsinformationen übereinstimmen;
für den Fall, dass die Ziel-MME (183) nicht die Informationen enthält, die mit den ersten UE-Funkfähigkeitsinformationen übereinstimmen, Zuweisen (315) zweiter UE-Funkfähigkeitsinformationen an die UE (101), wobei die zweiten UE-Funkfähigkeitsinformationen dem öffentlichen Landmobilfunknetz, PLMN, zugewiesene UE-Funkinformationen sind;
Senden (317) einer Übergabeanforderungsnachricht, die die ersten oder die zweiten UE-Funkfähigkeitsinformationen enthält, an eine Ziel-eNB (181);
Empfangen (321) einer Übergabeanforderungsbestätigung von der Ziel-eNB (181), die einen Container umfasst, der von der Ziel-eNB (181) erzeugt wird und die gesendeten ersten oder zweiten UE-Funkfähigkeitsinformationen enthält; und
Senden (323) einer Vorwärtsverlagerungsantwort, die den Container umfasst, an die Quell-AMF (111), um den Container über ein Quell-Funkzugangsnetzwerk der 5. Generation, 5G RAN, (103) an die UE (101) bereitzustellen,
wobei die ersten UE-Funkfähigkeitsinformationen eine erste UE-Funkfähigkeitskennung und Versionsinformationen der ersten UE-Funkfähigkeitskennung umfassen, und
wobei die zweiten UE-Funkfähigkeitsinformationen eine zweite UE-Funkfähigkeitskennung und Versionsinformationen der zweiten UE-Funkfähigkeitskennung umfassen.

2. Verfahren, das von einer Benutzerausrüstung, UE, (101) zum Durchführen einer Kommunikation in einem drahtlosen Kommunikationssystem in einer Inter-Radio-Access-Technology-, RAT, -Übergabesituation durchgeführt wird, wobei das Verfahren Folgendes umfasst:
Senden (301) einer Registrierungsanforderung, die erste UE-Funkfähigkeitsinformationen enthält, an ein Quell-Funkzugangsnetzwerk der 5. Generation, 5G RAN, (103);
Empfangen (327) eines Übergabebefehls von dem Quell-5G-RAN (103), der einen Container enthält, der von einer Ziel-eNB (181) erzeugt wird und die ersten oder zweiten UE-Funkfähigkeitsinformationen enthält, wobei die zweiten UE-Funkfähigkeitsinformationen dem öffentlichen Landmobilfunknetz, PLMN, zugewiesene UE-Funkinformationen sind und die zweiten UE-Funkfähigkeitsinformationen von einer Ziel-Mobilitätsmanagement-Entität, MME, (183) zugewiesen werden (315); und
Aktualisieren der in der UE (101) gespeicherten ersten UE-Funkfähigkeitsinformationen auf der Grundlage der empfangenen ersten oder zweiten UE-Funkfähigkeitsinformationen,
wobei die ersten UE-Funkfähigkeitsinformationen eine erste UE-Funkfähigkeitskennung und Versionsinformationen der ersten UE-Funkfähigkeitskennung umfassen, und
wobei die zweiten UE-Funkfähigkeitsinformationen eine zweite UE-Funkfähigkeitskennung und Versionsinformationen der zweiten UE-Funkfähigkeitskennung umfassen, und
wobei das Verfahren ferner Folgendes umfasst: Entscheiden, die in der UE (101) gespeicherten ersten UE-Funkfähigkeitsinformationen zu aktualisieren, falls die Versionsinformationen der in der UE (101) gespeicherten ersten UE-Funkfähigkeitskennung nicht mit den Versionsinformationen der empfangenen ersten oder zweiten UE-Funkfähigkeitskennung übereinstimmen.

3. Verfahren nach Anspruch 2, umfassend:
Feststellen, ob die in der UE gespeicherten ersten UE-Funkfähigkeitsinformationen aktualisiert werden sollen, basierend auf einem Ergebnis des Vergleichs eines niedrigstwertigen Bits, LSB, der in der UE gespeicherten ersten UE-Funkfähigkeitsinformationen mit einem LSB der empfangenen ersten oder zweiten UE-Funkfähigkeitsinformationen.

4. Ziel-Mobilitätsmanagement-Entität, MME, (183) in einem drahtlosen Kommunikationssystem in einer Inter-Radio-Access-Technology-, RAT, -Übergabesituation, wobei die Ziel-MME (183) Folgendes umfasst:
einen Transceiver (1210); und
mindestens einen Prozessor (1230), der dazu konfiguriert ist,
von einer Quellzugangs- und Mobilitätsmanagementfunktion, AMF, (111) eine Vorwärtsverlagerungsanforderung, die erste Benutzerausrüstung-, UE, - Funkfähigkeitsinformationen umfasst, zu empfangen (313),
zu identifizieren (315), dass die Ziel-MME (183) keine Informationen enthält, die mit den ersten UE-Funkfähigkeitsinformationen übereinstimmen,
für den Fall, dass die Ziel-MME (813) nicht die Informationen enthält, die mit den ersten UE-Funkfähigkeitsinformationen übereinstimmen, der UE (101) zweite UE-Funkfähigkeitsinformationen zuzuweisen (315), wobei die zweiten UE-Funkfähigkeitsinformationen dem öffentlichen Landmobilfunknetz, PLMN, zugewiesene UE-Funkinformationen sind,
eine Übergabeanforderungsnachricht, die die ersten oder die zweiten UE-Funkfähigkeitsinformationen enthält, über den Transceiver an eine Ziel-eNB (181) zu senden (317),
von der Ziel-eNB (181) eine Übergabeanforderungsbestätigung zu empfangen (321), die einen Container umfasst, der von der Ziel-eNB (181) erzeugt wird und die gesendeten ersten oder zweiten UE-Funkfähigkeitsinformationen enthält, und
eine Vorwärtsverlagerungsantwort, die den Container umfasst, an die Quell-AMF (111) zu senden (323), um den Container über ein Quell-Funkzugangsnetzwerk der 5. Generation, 5G RAN, (103) an die UE (101) bereitzustellen,
wobei die ersten UE-Funkfähigkeitsinformationen eine erste UE-Funkfähigkeitskennung und Versionsinformationen der ersten UE-Funkfähigkeitskennung umfassen, und
wobei die zweiten UE-Funkfähigkeitsinformationen eine zweite UE-Funkfähigkeitskennung und Versionsinformationen der zweiten UE-Funkfähigkeitskennung umfassen.

5. Benutzerausrüstung, UE, (101) in einem drahtlosen Kommunikationssystem in einer Inter-Radio-Access-Technology-, RAT, -Übergabesituation, wobei die UE (101) Folgendes umfasst:
einen Transceiver (1110); und
mindestens einen Prozessor (1130), der dazu konfiguriert ist,
eine Registrierungsanforderung, die erste UE-Funkfähigkeitsinformationen enthält, über den Transceiver an ein Quell-Funkzugangsnetzwerk der 5. Generation, 5G RAN, (103) zu senden (301),
über den Transceiver von dem Quell-5G RAN (103) einen Übergabebefehl zu empfangen (327), der einen Container enthält, der von einer Ziel-eNB (181) erzeugt wird und die ersten oder die zweiten UE-Funkfähigkeitsinformationen enthält, wobei die zweiten UE-Funkfähigkeitsinformationen dem öffentlichen Landmobilfunknetz, PLMN, zugewiesene UE-Funkinformationen sind und die zweiten UE-Funkfähigkeitsinformationen von einer Ziel-Mobilitätsmanagement-Entität, MME, (183) zugewiesen werden (315), und
die in der UE (101) gespeicherten ersten UE-Funkfähigkeitsinformationen auf der Grundlage der empfangenen ersten oder zweiten UE-Funkfähigkeitsinformationen zu aktualisieren,
wobei die ersten UE-Funkfähigkeitsinformationen eine erste UE-Funkfähigkeitskennung und Versionsinformationen der ersten UE-Funkfähigkeitskennung umfassen,
wobei die zweiten UE-Funkfähigkeitsinformationen eine zweite UE-Funkfähigkeitskennung und Versionsinformationen der zweiten UE-Funkfähigkeitskennung umfassen, und
wobei der mindestens eine Prozessor ferner dazu konfiguriert ist, zu entscheiden, die in der UE (101) gespeicherten ersten UE-Funkfähigkeitsinformationen zu aktualisieren, falls die Versionsinformationen der in der UE (101) gespeicherten ersten UE-Funkfähigkeitskennung nicht mit den Versionsinformationen der empfangenen ersten oder zweiten UE-Funkfähigkeitskennung übereinstimmen.

6. UE nach Anspruch 5, wobei der mindestens eine Prozessor ferner dazu konfiguriert ist, auf der Grundlage eines Ergebnisses des Vergleichs eines niedrigstwertigen Bits, LSB, der in der UE gespeicherten ersten UE-Funkfähigkeitsinformationen mit einem LSB der empfangenen ersten oder zweiten UE-Funkfähigkeitsinformationen festzustellen, ob die in der UE gespeicherten ersten UE-Funkfähigkeitsinformationen aktualisiert werden sollen.

## Revendications

1. Procédé, effectué par une entité de gestion de mobilité cible, MME, (183) pour effectuer une communication dans un système de communication sans fil dans une situation de transfert d'inter-technique d'accès radio, RAT, le procédé consistant à :
recevoir (313) une demande de relocalisation en avant comprenant des informations de capacité radio d'un premier équipement utilisateur, UE, depuis une fonction de gestion d'accès et de mobilité source, AMF, (111) ;
identifier (315) que la MME cible (183) ne comporte pas d'informations correspondant aux informations de capacité radio du premier UE ;
dans le cas où la MME cible (183) ne comporte pas les informations correspondant aux informations de capacité radio du premier UE, allouer (315) des informations de capacité radio d'un second UE à l'UE (101), dans lequel les informations de capacité radio du second UE sont des informations radio UE assignées par public land mobile network, PLMN ;
transmettre (317) un message de demande de transfert comportant les informations de capacité radio du premier UE ou du second UE vers un eNB cible (181) ;
recevoir (321), depuis le eNB cible (181), un accusé de réception de demande de transfert comprenant un conteneur qui est généré par le eNB cible (181) et comporte les informations de capacité radio du premier UE ou du second UE transmises ; et
transmettre (323) une réponse de relocalisation en avant comprenant le conteneur vers l'AMF source (111) afin de fournir le conteneur à l'UE (101) à travers un réseau d'accès radio de 5^{c} génération, 5G RAN, source (103),
dans lequel les informations de capacité radio du premier UE comprennent un premier identifiant de capacité radio UE et des informations de version du premier identifiant de capacité radio UE, et
dans lequel les informations de capacité radio du second UE comprennent un second identifiant de capacité radio UE et des informations de version du second identifiant de capacité radio UE.

2. Procédé, effectué par un équipement utilisateur, UE, (101) pour effectuer une communication dans un système de communication sans fil dans une situation de transfert d'inter-technique d'accès radio, RAT, le procédé consistant à :
transmettre (301) une demande d'enregistrement comportant des informations de capacité radio du premier UE vers un réseau d'accès radio de 5^{c} génération, 5G RAN, source (103) ;
recevoir (327), depuis le 5G RAN source (103), une commande de transfert comportant un conteneur qui est généré par un eNB cible (181) et comporte les informations de capacité radio du premier UE ou du second UE, dans lequel les informations de capacité radio du second UE sont des informations radio UE assignées par un réseau mobile terrestre public, PLMN, et les informations de capacité radio du second UE sont allouées (315) depuis une entité de gestion de mobilité cible, MME, (183) ; et
mettre à jour les informations de capacité radio du premier UE stockées dans l'UE (101) sur la base des informations de capacité radio du premier UE ou du second UE reçues,
dans lequel les informations de capacité radio du premier UE comprennent un premier identifiant de capacité radio UE et des informations de version du premier identifiant de capacité radio UE, et
dans lequel les informations de capacité radio du second UE comprennent un second identifiant de capacité radio UE et des informations de version du second identifiant de capacité radio UE, et
dans lequel le procédé consiste en outre à : déterminer de mettre à jour les informations de capacité radio du premier UE stockées dans l'UE (101) dans le cas où les informations de version du premier identifiant de capacité radio UE stockées dans l'UE (101) ne correspondent pas aux informations de version du premier ou du second identifiant de capacité radio UE reçues.

3. Procédé selon la revendication 2, consistant en outre à :
déterminer s'il convient de mettre à jour les informations de capacité radio du premier UE stockées dans l'UE sur la base d'un résultat de comparaison d'un bit de poids faible, LSB, des informations de capacité radio du premier UE stockées dans l'UE avec un LSB des informations de capacité radio du premier UE ou du second UE reçues.

4. Entité de gestion de mobilité cible, MME, (183) dans un système de communication sans fil dans une situation de transfert d'inter-technique d'accès radio, RAT, la MME cible (183) comprenant :
un émetteur-récepteur (1210) ; et
au moins un processeur (1230) configuré pour
recevoir (313) une demande de relocalisation en avant comprenant des informations de capacité radio d'un premier équipement utilisateur, UE, depuis une fonction de gestion d'accès et de mobilité source, AMF, (111) ;
identifier (315) que la MME cible (183) ne comporte pas d'informations correspondant aux informations de capacité radio du premier UE ;
dans le cas où la MME cible (813) ne comporte pas les informations correspondant aux informations de capacité radio du premier UE, allouer (315) des informations de capacité radio d'un second UE à l'UE (101), dans lequel les informations de capacité radio du second UE sont des informations radio UE assignées par public land mobile network, PLMN,
transmettre (317) un message de demande de transfert comportant les informations de capacité radio du premier UE ou du second UE vers un eNB cible (181) à travers l'émetteur-récepteur,
recevoir (321), depuis le eNB cible (181), un accusé de réception de demande de transfert comprenant un conteneur qui est généré par le eNB cible (181) et comporte les informations de capacité radio du premier UE ou du second UE transmises, et
transmettre (323) une réponse de relocalisation en avant comprenant le conteneur vers l'AMF source (111) afin de fournir le conteneur à l'UE (101) à travers un réseau d'accès radio de 5^{c} génération, 5G RAN, source (103),
dans lequel les informations de capacité radio du premier UE comprennent un premier identifiant de capacité radio UE et des informations de version du premier identifiant de capacité radio UE, et
dans lequel les informations de capacité radio du second UE comprennent un second identifiant de capacité radio UE et des informations de version du second identifiant de capacité radio UE.

5. Équipement utilisateur, UE, (101) dans un système de communication sans fil dans une situation de transfert d'inter-technique d'accès radio, RAT, l'UE (101) comprenant :
un émetteur-récepteur (1110) ; et
au moins un processeur (1130) configuré pour
transmettre (301) une demande d'enregistrement comportant des informations de capacité radio du premier UE vers un réseau d'accès radio de 5^{c} génération, 5G RAN, source (103) à travers l'émetteur-récepteur,
recevoir (327), depuis le 5G RAN source (103) à travers l'émetteur-récepteur, une commande de transfert comportant un conteneur qui est généré par un eNB cible (181) et comporte les informations de capacité radio du premier UE ou du second UE, dans lequel les informations de capacité radio du second UE sont des informations radio UE assignées par réseau mobile terrestre public, PLMN, et les informations de capacité radio du second UE sont allouées (315) depuis une entité de gestion de mobilité cible, MME, (183), et
mettre à jour les informations de capacité radio du premier UE stockées dans l'UE (101) sur la base des informations de capacité radio du premier UE ou du second UE reçues,
dans lequel les informations de capacité radio du premier UE comprennent un premier identifiant de capacité radio UE et des informations de version du premier identifiant de capacité radio UE,
dans lequel les informations de capacité radio du second UE comprennent un second identifiant de capacité radio UE et des informations de version du second identifiant de capacité radio UE, et
dans lequel l'au moins un processeur est en outre configuré pour déterminer de mettre à jour les informations de capacité radio du premier UE stockées dans l'UE (101) dans le cas où les informations de version du premier identifiant de capacité radio UE stockées dans l'UE (101) ne correspondent pas aux informations de version du premier ou du second identifiant de capacité radio UE reçues.

6. UE selon la revendication 5, dans lequel l'au moins un processeur est en outre configuré pour déterminer s'il convient de mettre à jour les informations de capacité radio du premier UE stockées dans l'UE sur la base d'un résultat de comparaison d'un bit de poids faible, LSB, des informations de capacité radio du premier UE stockées dans l'UE avec un LSB des informations de capacité radio du premier UE ou du second UE reçues.
